(19) Europäisches Patentamt
European Patent Office
Office européen des brevets

(11) EP 4 091 817 B1

(12) **EUROPEAN PATENT SPECIFICATION**

(45) Date of publication and mention of the grant of the patent:
**06.08.2025 Bulletin 2025/32**

(21) Application number: **20914436.9**

(22) Date of filing: **21.12.2020**

(51) International Patent Classification (IPC):
***C08G 63/183*** *(2006.01)* ***C08G 63/189*** *(2006.01)*
***C08G 63/60*** *(2006.01)* ***C08J 5/18*** *(2006.01)*
***C08K 5/136*** *(2006.01)* ***C08K 3/38*** *(2006.01)*
***C08L 27/18*** *(2006.01)*

(52) Cooperative Patent Classification (CPC):
(C-Sets available)
**C08J 5/18; C08G 63/183; C08G 63/189; C08G 63/605; C08L 27/18;** C08J 2367/03; C08K 5/136; C08K 2003/385 (Cont.)

(86) International application number:
**PCT/JP2020/047622**

(87) International publication number:
**WO 2021/145149 (22.07.2021 Gazette 2021/29)**

(54) **LIQUID CRYSTAL POLYESTER RESIN, LIQUID CRYSTAL POLYESTER RESIN COMPOSITION, FORMED PRODUCT, LAYERED BODY AND LIQUID CRYSTAL POLYESTER RESIN FILM, AND PRODUCTION METHOD THEREFOR**

FLÜSSIGKRISTALLPOLYESTERHARZ, FLÜSSIGKRISTALLINE POLYESTERHARZZUSAMMENSETZUNG, GEFORMTES PRODUKT, SCHICHTKÖRPER UND FLÜSSIGKRISTALLPOLYESTERHARZFILM UND HERSTELLUNGSVERFAHREN DAFÜR

RÉSINE ET COMPOSITION DE RÉSINE DE POLYESTER À CRISTAUX LIQUIDES, PRODUIT FORMÉ, CORPS STRATIFIÉ, FILM DE RÉSINE DE POLYESTER À CRISTAUX LIQUIDES ET PROCÉDÉ DE FABRICATION ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.01.2020 JP 2020006036**
**31.08.2020 JP 2020145683**

(43) Date of publication of application:
**23.11.2022 Bulletin 2022/47**

(73) Proprietor: **Toray Industries, Inc.**
**Tokyo 103-8666 (JP)**

(72) Inventors:
- **KONISHI, Akito**
**Nagoya-shi, Aichi 455-8502 (JP)**
- **NAKAGAWA, Hiroshi**
**Nagoya-shi, Aichi 455-8502 (JP)**
- **TANABE, Junki**
**Nagoya-shi, Aichi 455-8502 (JP)**
- **UMETSU, Hideyuki**
**Nagoya-shi, Aichi 455-8502 (JP)**

(74) Representative: **Mewburn Ellis LLP**
**Aurora Building**
**Counterslip**
**Bristol BS1 6BX (GB)**

(56) References cited:
**EP-A1- 3 480 240**
**WO-A1-2018/181525**
**JP-A- 2004 352 862**
**JP-A- 2004 352 862**
**JP-A- 2015 189 896**
**JP-A- 2019 183 040**
**JP-B1- 6 533 880**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 27/18, C08K 3/38, C08L 67/03**

## Description

[Technical Field]

The present invention relates to a liquid crystal polyester resin, a liquid crystal polyester resin composition, a laminate and a liquid crystal polyester resin film. More particularly, the present invention relates to a liquid crystal polyester resin, a liquid crystal polyester resin composition, and a laminate and a liquid crystal polyester resin film obtained by using the same.

[Background Art]

The liquid crystal polyester resin has a liquid crystal structure and is therefore excellent in heat resistance, fluidity and dimensional stability. For this reason, demand is increasing mainly for electric/electronic components which are required to have those properties. In particular, a laminate comprising a liquid crystal polyester resin film and a metal foil which are mutually laminated are used for mobile terminals typified by smartphones and in-vehicle substrates, demand is significantly increasing in recent years with the increase in demand for high-frequency band applications. In a high frequency environment, it is a problem that the transmission loss increases. However, in order to reduce the transmission loss from the material side, there is a need to use low dielectric, particularly low dielectric loss tangent materials. Furthermore, with the recent trend toward higher performance, miniaturization and weight reduction of equipment, the temperature inside the equipment becomes higher, so that low dielectric loss tangent at high temperature is important. There has been proposed, as an example of a liquid crystal polyester resin having low dielectric loss tangent, a liquid crystal polyester resin including a certain amount of a structural unit composed of 6-hydroxy-2-naphthoic acid (for example, Patent Literature 1). There has also been proposed a liquid crystal polyester resin having barrier properties enhanced by having a certain amount or more of a structural unit composed similarly of 6-hydroxy-2-naphthoic acid (for example, Patent Literatures 2 and 3).

Meanwhile, the laminate comprising a liquid crystal polyester resin film and a metal foil which are mutually laminated may be deformed after subjecting to a heat treatment due to the difference in linear expansion coefficient between the liquid crystal polyester resin and the metal. Examples of the method for suppressing the deformation of the laminate include increasing the elastic modulus and lowering the linear expansion of the liquid crystal polyester resin. There has been proposed, as an example of improving properties of the liquid crystal polyester resin, improving the mechanical properties, heat resistance and impact strength at low temperature by reducing ΔS (entropy of melting) of the liquid crystal polyester resin (for example, Patent Literature 4). Patent Literature 5 discloses a wholly aromatic liquid crystalline polyester resin comprising various structural units as defined therein.

[Citation List]

[Patent Literature]

[Patent Literature 1]
JP 2004-196930 A
[Patent Literature 2]
JP 2005-126651 A
[Patent Literature 3]
JP 5-1140 A
[Patent Literature 4]
JP 2004-352862 A
[Patent Literature 5]
EP 3 480 240 A1

[Summary of Invention]

[Technical Problem]

The method mentioned in Patent Literature 1 had a problem that the liquid crystal polyester resin has high dielectric loss tangent and also has high dielectric loss tangent at high temperature, and a problem that it has low elastic modulus and high linear expansion rate. The methods mentioned in Patent Literatures 2 and 3 had a problem that,

although barrier properties of the liquid crystal polyester resin are improved, the liquid crystal polyester resin has high dielectric loss tangent at high temperature, and also has low elastic modulus and high linear expansion coefficient. The method mentioned in Patent Literature 4 had a problems that, although mechanical properties of the liquid crystal polyester resin are improved, the liquid crystal polyester resin has low elastic modulus and high linear expansion coefficient, and also has high dielectric loss tangent at high temperature.

An object of the present invention is to provide a liquid crystal polyester resin and a liquid crystal polyester resin composition, which have low dielectric loss tangent at high temperature and also have high elastic modulus and low linear expansion coefficient when formed into a film; a molded article and a liquid crystal polyester resin film obtained therefrom; and a method for producing a laminate using the resin and the resin composition.

[Means for Solving the Problems]

As a result of an intensive study to solve the above problems, the present inventors have found that it is possible to obtain a liquid crystal polyester resin including a certain amount or more of a structural unit derived from 6-hydroxy-2-naphthoic acid, which exhibits low dielectric loss tangent at high temperature when formed into a film by controlling ΔS (entropy of melting) below a certain level, and also has high elastic modulus and low linear expansion coefficient, and thus the present invention has been completed.

Namely, the present invention is as follows.

A liquid crystal polyester resin which includes 42 to 80 mol% of the following structural unit (I) relative to 100 mol% of the total structural unit of the liquid crystal polyester resin, and ΔS (entropy of melting) defined by the following equation [1] is $0.01 \times 10^{-3}$ to $2.7 \times 10^{-3}$ J/g·K:

$$\Delta S(J/g\cdot K) = \Delta Hm(J/g)/Tm(K) \qquad [1]$$

[Chemical Formula 1]

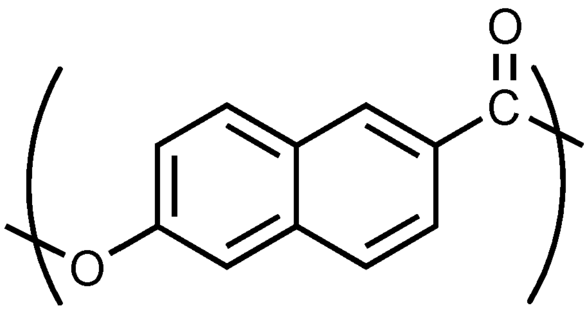

(I)

wherein Tm means an endothermic peak temperature determined as follows: after observation of an endothermic peak temperature ($Tm_1$) observed when heating a liquid crystal polyester under temperature rising conditions of 20°C/minute from room temperature in differential scanning calorimetry, the liquid crystal polyester was maintained at the temperature of $Tm_1$ + 20°C for 5 minutes, followed by observation of the endothermic peak temperature observed when the temperature is once fallen to room temperature under temperature falling conditions of 20°C/minute and then raised again under temperature rising conditions of 20°C/minute, and ΔHm is an endothermic peak area of Tm.

In some embodiments, the liquid crystal polyester resin further includes 1 to 15 mol% of the following structural unit (II).

[Chemical Formula 2]

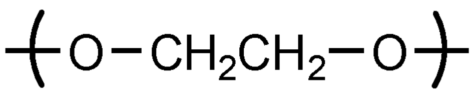

(II)

In some embodiments, the liquid crystal polyester resin further includes 1 to 20 mol% of the following structural unit (III).

[Chemical Formula 3]

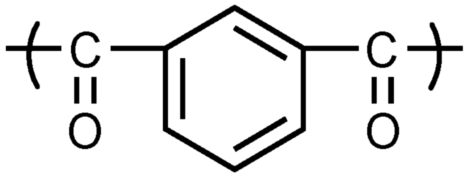

(III)

In some embodiments, the liquid crystal polyester resin further includes 1 to 15 mol% of the following structural unit (IV).

[Chemical Formula 4]

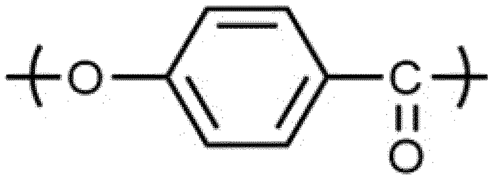

(IV)

In some embodiments of the liquid crystal polyester resin, the total amount of the structural unit (II) and the structural unit (III) is 9 to 22 mol%.

In some embodiments, the liquid crystal polyester resin further includes 0.01 to 10 mol% of the following structural unit (V):

[Chemical Formula 5]

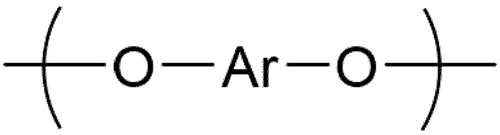

(V)

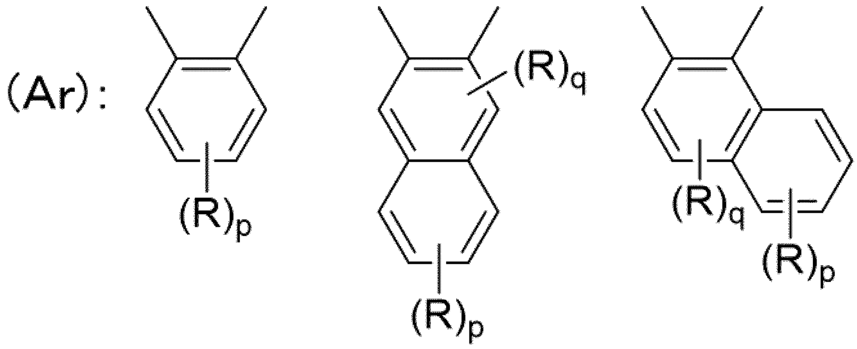

wherein Ar represents a divalent group selected from the group consisting of groups represented by (Ar), a substituent R represents F, Cl, Br, $CF_3$, a phenyl group, an alkyl group having 1 to 5 carbon atoms or an alkoxy group having 1 to 5 carbon atoms, p is any one of integers of 0 to 4, and q is any one of integers of 0 to 2.

In some embodiments, the liquid crystal polyester resin is a powder having an average particle size of 0.1 to 200 μm. Also provided is a liquid crystal polyester resin composition comprising 10 to 500 parts by weight of a filler relative to 100 parts by weight of the liquid crystal polyester resin of the invention.

Also provided is a liquid crystal polyester resin composition comprising the liquid crystal polyester resin according to the invention or the liquid crystal polyester resin composition of the invention, and a solvent, wherein 100 to 10,000 parts by weight of the solvent is included relative to 100 parts by weight of the liquid crystal polyester resin. Also provided is a molded article comprising the liquid crystal polyester resin of the invention or the liquid crystal polyester resin composition of the invention.

Also provided is a liquid crystal polyester resin film comprising the liquid crystal polyester resin according to the

invention or the liquid crystal polyester resin composition according to the invention.

Also provided is a laminate comprising a support and a resin layer which are mutually laminated, wherein the support is laminated on at least one surface of the resin layer including the liquid crystal polyester resin according to the invention or the liquid crystal polyester resin composition according to the invention.

Also provided is a method for producing a laminate, which comprises applying the liquid crystal polyester resin composition according to the invention onto a support and removing the solvent.

Also provided is a method for producing a liquid crystal polyester resin film, which comprises removing the support from the laminate obtained by the method according to the invention to obtain a liquid crystal polyester resin film.

[Advantageous Effects of the Invention]

The liquid crystal polyester resin of the present invention has low dielectric loss tangent at high temperature and also has high elastic modulus and low linear expansion coefficient when formed into a film. The film obtained from such resin is suitably as laminates used for flexible printed wiring boards and semiconductor packages in electric/electronic components and mechanical components.

[Description of Embodiments]

The present invention will be described in detail below.

<Liquid Crystal Polyester Resin>

The liquid crystal polyester resin is a polyester which forms an anisotropic molten phase. Examples of such a polyester resin include polyesters composed of structural units selected to form an anisotropic molten phase from an oxycarbonyl unit, a dioxy unit, a dicarbonyl unit and the like, which will be mentioned later.

The structural units constituting the liquid crystal polyester resin will be described below. The liquid crystal polyester resin of the present invention includes, as the oxycarbonyl unit, 42 mol% or more of the following structural unit (I) relative to 100 mol% of the total structural unit of the liquid crystal polyester resin. The structural unit (I) is a structural unit derived from 6-hydroxy-2-naphthoic acid. When the amount of the structural unit (I) is less than 42 mol%, the dielectric loss tangent at high temperature significantly increases and the elastic modulus significantly decreases, and also the linear expansion coefficient increases. From the viewpoint of obtaining low dielectric loss tangent at high temperature, and also obtaining high elastic modulus and low linear expansion coefficient, the amount of the structural unit (I) is preferably 47 mol% or more, more preferably 52 mol% or more, still more preferably 57 mol% or more, and particularly preferably 62 mol% or more.

Meanwhile, the liquid crystal polyester resin of the present invention includes 80 mol% or less of the following structural unit (I) relative to 100 mol% of the total structural unit of the liquid crystal polyester resin. When the amount of the structural unit (I) is more than 80 mol%, infusible foreign substances derived from the long chains of the structural unit (I) is likely to be generated, leading to significant deterioration of the elastic modulus and the linear expansion coefficient, and deterioration of the solubility in solvent and appearance. From the viewpoint of being excellent in solubility in solvent and obtaining high elastic modulus and low linear expansion coefficient, the amount of the structural unit (I) is preferably 77 mol% or less, more preferably 75 mol% or less, still more preferably 72 mol% or less, and particularly preferably 70 mol% or less.

It is preferable to include the structural unit (I) in the largest amount, of the total structural unit.

[Chemical Formula 6]

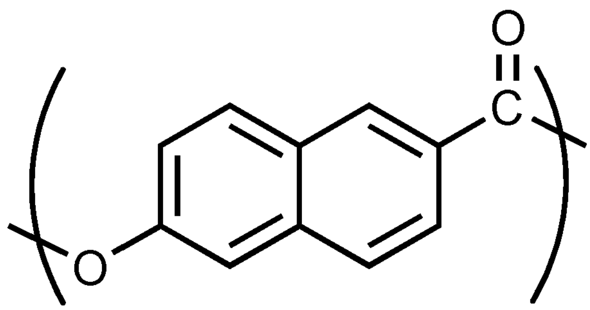

(I)

It is preferable that the liquid crystal polyester resin of the present invention further includes, as the oxycarbonyl

unit, 1 mol% or more of the structural unit (IV), from the viewpoint of being capable of easily controlling ΔS (entropy of melting) mentioned later within a preferable range, and obtaining low dielectric loss tangent at high temperature and also obtaining high elastic modulus and low linear expansion when formed into a film by the method mentioned later. The structural unit (IV) is a structural unit derived from p-hydroxybenzoic acid. The amount thereof is more preferably 1.5 mol% or more, and still more preferably 2 mol% or more. Meanwhile, from the viewpoint of being capable of easily controlling ΔS (entropy of melting) mentioned later within a preferable range, and obtaining low dielectric loss tangent at high temperature and also obtaining high elastic modulus and low linear expansion when formed into a film by the method mentioned later, it is preferable to include 15 mol% or less of the structural unit (IV). The amount thereof is more preferably 13 mol% or less, and still more preferably 12 mol% or less.

[Chemical Formula 7]

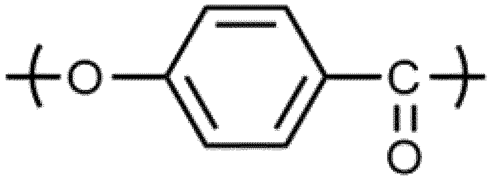

(IV)

In addition, it is possible to use, as the oxycarbonyl unit, a structural unit derived from m-hydroxybenzoic acid.

It is preferable that the liquid crystal polyester resin of the present invention includes, as the dioxy unit, 1 mol% or more of the following structural unit (II) relative to 100 mol% of the total structural unit of the liquid crystal polyester resin, from the viewpoint of being excellent in solubility in solvent, and from the viewpoint of being capable of easily controlling ΔS (melting entropy) mentioned later within a preferable range, and obtaining low dielectric loss tangent at high temperature and also obtaining high elastic modulus and low linear expansion when formed into a film by the method mentioned later. The structural unit (II) is a structural unit derived from ethylene glycol. The amount thereof is more preferably 1.5 mol% or more, and still more preferably 2 mol% or more. Meanwhile, from the viewpoint of being capable of easily controlling ΔS (entropy of melting) mentioned later within a preferable range, and obtaining low dielectric loss tangent at high temperature and also obtaining high elastic modulus and low linear expansion when formed into a film by the method mentioned later, it is preferable to include 15 mol% or less of the structural unit (II). The amount thereof is more preferably 13 mol% or less, and still more preferably 10 mol% or less.

[Chemical Formula 8]

$$-(O-CH_2CH_2-O)- \qquad \text{(II)}$$

It is preferable that the liquid crystal polyester resin of the present invention includes, as the dioxy unit, 0.01 mol% or more of the following structural unit (V) relative to 100 mol% of the total structural unit of the liquid crystal polyester resin, from the viewpoint of being excellent in solubility in solvent, and from the viewpoint of being capable of easily controlling ΔS (melting entropy) mentioned later within a preferable range, and obtaining low dielectric loss tangent at high temperature and also obtaining high elastic modulus and low linear expansion when formed into a film by the method mentioned later. The amount thereof is more preferably 0.1 mol% or more, still more preferably 0.2 mol% or more, and particularly preferably 0.3 mol% or more. Meanwhile, from the viewpoint of being capable of easily controlling ΔS (entropy of melting) mentioned later within a preferable range, and obtaining low dielectric loss tangent at high temperature and also obtaining high elastic modulus and low linear expansion when formed into a film by the method mentioned later, it is preferable to include 10 mol% or less of the structural unit (V). The amount thereof is more preferably 5 mol% or less, still more preferably 4 mol% or less, and particularly preferably 3 mol% or less:

[Chemical Formula 9]

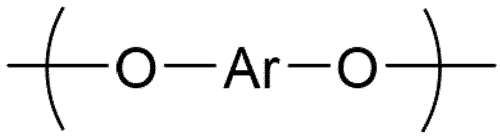

(V)

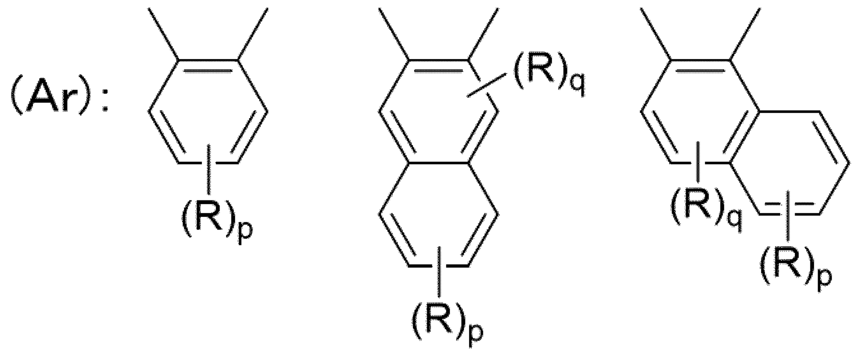

wherein Ar in the above structural unit (V) represents a divalent group selected from the group consisting of groups represented by (Ar), a substituent R represents F, Cl, Br, $CF_3$, a phenyl group, an alkyl group having 1 to 5 carbon atoms or an alkoxy group having 1 to 5 carbon atoms, p is any one of integers of 0 to 4, and q is any one of integers of 0 to 2.

Specific examples of the structural unit (V) include structural units derived from catechol, methylcatechol, ethylcatechol, t-butylcatechol, phenylcatechol, chlorocatechol, fluorocatechol, bromocatechol, methoxycatechol, 2,3-dihydroxynaphthalene, 1,2-dihydroxynaphthalene and the like. From the viewpoint of easy availability, polymerizability and low dielectric loss tangent at high temperature, and high elastic modulus and low linear expansion coefficient, structural units derived from catechol derivatives are preferable, structural units derived from catechol, methylcatechol and t-butylcatechol are more preferable, and a structural unit derived from catechol is still more preferable.

Specific examples of the dioxy unit other than the structural units (II) and (V) include structural units produced from aromatic diols such as 4,4'-dihydroxybiphenyl, hydroquinone, resorcinol, t-butylhydroquinone, phenylhydroquinone, chlorohydroquinone, 2,6-dihydroxynaphthalene, 2,7-dihydroxynaphthalene, 3,4'-dihydroxybiphenyl, 2,2-bis(4-hydroxyphenyl)propane, 4,4'-dihydroxydiphenyl ether, 4,4'-dihydroxydiphenylsulfone, 4,4'-dihydroxydiphenylsulfide and 4,4'-dihydroxybenzophenone; structural units produced from aliphatic diols such as propylene glycol, 1,4-butanediol, 1,6-hexanediol and neopentyl glycol; and structural units produced from alicyclic diols such as 1,4-cyclohexanediol and 1,4-cyclohexanedimethanol, and one or more thereof can be used as the dioxy unit. From the viewpoints of obtaining low dielectric loss tangent at high temperature and also obtaining high elastic modulus and low linear expansion coefficient, structural units produced from aromatic diols are preferable, and 4,4'-dihydroxybiphenyl and hydroquinone are more preferable.

The content of the dioxy unit other than the structural units (II) and (V) is preferably 1 mol% or more, more preferably 3 mol% or more, and still more preferably 5 mol% or more, from the viewpoint of obtaining low dielectric loss tangent at high temperature and also obtaining high elastic modulus and low linear expansion coefficient. From the viewpoint of obtaining low dielectric loss tangent at high temperature and also obtaining high elastic modulus and low linear expansion coefficient, the content thereof is preferably 20 mol% or less, more preferably 15 mol% or less, and still more preferably 10 mol% or less.

It is preferable that the liquid crystal polyester resin of the present invention further includes, as the dicarbonyl unit, 1 mol% or more of the following structural unit (III), relative to 100 mol% of the total structural unit of the liquid crystal polyester resin, from the viewpoint of being excellent in solubility in solvent, and from the viewpoint being capable of easily controlling ΔS (entropy of melting) mentioned later within a preferable range, and obtaining low dielectric loss tangent at high temperature and also obtaining high elastic modulus and low linear expansion when formed into a film by the method mentioned later. The structural unit (III) is a structural unit derived from isophthalic acid. The amount thereof is more preferably 3 mol% or more, and still more preferably 5 mol% or more. Meanwhile, from the viewpoint of being capable of easily controlling ΔS (entropy of melting) mentioned later within a preferable range, and obtaining low dielectric loss tangent at high temperature and also obtaining high elastic modulus and low linear expansion when formed into a film by the method mentioned later, the amount thereof is preferably 20 mol% or less, more preferably 17 mol% or less, still more preferably 13 mol% or less, and particularly preferably 10 mol% or less.

[Chemical Formula 10]

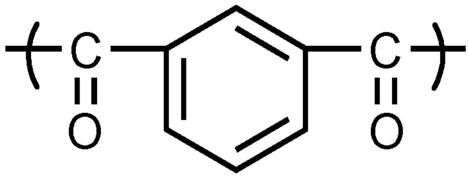

(III)

Specific examples of the dicarbonyl unit other than the structural unit (III) include structural units produced from aromatic dicarboxylic acids such as terephthalic acid, 2,6-naphthalenedicarboxylic acid, 4,4'-diphenyldicarboxylic acid, 3,3'-diphenyldicarboxylic acid, 2,2'-diphenyldicarboxylic acid, 1,2-bis(phenoxy)ethane-4,4'-dicarboxylic acid, 1,2-bis(2-chlorophenoxy)ethane-4,4'-dicarboxylic acid and 4,4'-diphenyl ether dicarboxylic acid; structural units produced from aliphatic dicarboxylic acids such as adipic acid, azelaic acid, sebacic acid, dodecanedioic acid and hexahydroterephthalic acid; and structural units produced from alicyclic dicarboxylic acids such as 1,4-cyclohexanedicarboxylic acid and 1,3-cyclohexanedicarboxylic acid, and one or more thereof can be used as the dicarbonyl unit. From the viewpoint of obtaining low dielectric loss tangent at high temperature and also obtaining high elastic modulus and low linear expansion coefficient, structural units produced from aromatic dicarboxylic acids are preferable, and terephthalic acid and 2,6-naphthalenedicarboxylic acid are more preferable.

The content of the dicarbonyl unit other than the structural unit (III) is preferably 1 mol% or more, more preferably 3 mol% or more, and still more preferably 5 mol% or more, from the viewpoint of obtaining low dielectric loss tangent at high temperature and also obtaining high elastic modulus and low linear expansion coefficient. From the viewpoint of obtaining low dielectric loss tangent at high temperature and also obtaining high elastic modulus and low linear expansion coefficient, the content thereof is preferably 20 mol% or less, more preferably 15 mol% or less, and still more preferably 10 mol% or less.

In the liquid crystal polyester resin of the present invention, the total amount of the structural unit (II) and the structural unit (III) is preferably 9 mol% or more, more preferably 10 mol% or more, and still more preferably 11 mol% or more, relative to 100 mol% of the total structural unit of the liquid crystal polyester resin, from the viewpoint of being excellent in solubility in solvent, and from the viewpoint of being capable of easily controlling ΔS (melting entropy) mentioned later within a preferable range, and obtaining low dielectric loss tangent at high temperature and also obtaining high elastic modulus and low linear expansion when formed into a film by the method mentioned later. Meanwhile, from the viewpoint of being capable of easily controlling ΔS (melting entropy) mentioned later within a preferable range, and obtaining low dielectric loss tangent at high temperature and also obtaining high elastic modulus and low linear expansion when formed into a film by the method mentioned later, the total amount of the structural unit (II) and the structural unit (III) is preferably 22 mol% or less, more preferably 20 mol% or less, and still more preferably 18 mol% or less. Either one of the structural unit (II) and the structural unit (III) may be included, and the amount of the other structural unit may be 0 mol%.

The liquid crystal polyester resin can include structural units derived from p-aminobenzoic acid, p-aminophenol and the like, in addition to the above structural units, as long as the liquid crystallinity and properties are not impaired.

The monomer as a raw material constituting each of the above structural units is not particularly limited as long as it has a structure capable of forming each structural unit. It is possible to use an acylated product of a hydroxyl group of such a monomer, a carboxylic acid derivative such as an esterified product, an acid halide and an acid anhydride of a carboxyl group and the like.

The calculation method of the content of each structural unit of the liquid crystal polyester resin will be shown below. First, the content can be obtained by pulverizing the liquid crystal polyester resin, adding tetramethylammonium hydroxide, and performing pyrolysis GC/MS measurement using GCMS-QP5050A manufactured by Shimadzu Corporation. The content of the structural unit not detected or below the detection limit is calculated as 0 mol%.

In the liquid crystal polyester resin of the present invention, ΔS (entropy of melting) defined by the following equation [1] is $0.01 \times 10^{-3}$ to $2.7 \times 10^{-3}$ J/g·K:

$$\Delta S\,(J/g\cdot K) = \Delta Hm\,(J/g) / Tm\,(K) \qquad [1]$$

wherein Tm means an endothermic peak temperature determined as follows: after observation of an endothermic peak temperature ($Tm_1$) observed when heating a liquid crystal polyester under temperature rising conditions of 20°C/minute from room temperature in differential scanning calorimetry, the liquid crystal polyester was maintained at the temperature of $Tm_1$ + 20°C for 5 minutes, followed by observation of the endothermic peak temperature observed when the temperature is once fallen to room temperature under temperature falling conditions of 20°C/minute and then raised again under temperature rising conditions of 20°C/minute, and ΔHm is an endothermic peak area of Tm.

ΔS is $0.01 \times 10^{-3}$ to $2.7 \times 10^{-3}$ J/g·K, which means that ΔS is relatively small. The smaller ΔS, the more the state of

the molecular chain of the liquid crystal polyester resin does not change before and after melting. That is, it means that the molecular chains of the liquid crystal polyester resin exist in a rigid and ordered state in both the solid state and the melted state of the liquid crystal polyester resin. Therefore, the molecular chains of the liquid crystal polyester resin are in a rigid and ordered state even when the resin is less likely to receive a shearing force during forming into a film by the method mentioned later. From the above, when ΔS is relatively small, low dielectric loss tangent can be achieved at high temperature, and also high elastic modulus and low linear expansion coefficient can be achieved even when formed into a film by the method mentioned later.

When the ΔS is less than $0.01 \times 10^{-3}$ J/g·K, for example, when the endothermic peak area (ΔHm) in differential scanning calorimetry is excessively small or not observed, the crystallinity is impaired, and thus the dielectric loss tangent at high temperature significantly increases, leading to significant deterioration of the elastic modulus and high linear expansion coefficient. From the viewpoint of obtaining low dielectric loss tangent at high temperature and also obtaining high elastic modulus and low linear expansion coefficient when formed into a film by the method mentioned later, ΔS is preferably $0.05 \times 10^{-3}$ J/g·K or more, more preferably $0.1 \times 10^{-3}$ J/g·K or more, and still more preferably $0.2 \times 10^{-3}$ J/g·K or more.

Meanwhile, when ΔS is more than $2.7 \times 10^{-3}$ J/g·K, the dielectric loss tangent at high temperature significantly increases, leading to significant deterioration of the elastic modulus and high linear expansion coefficient, when formed into a film by the method mentioned later. From the viewpoint of improving the solubility in solvent and obtaining low dielectric loss tangent at high temperature, and also obtaining high elastic modulus and low linear expansion coefficient when formed into a film by the method mentioned later, ΔS is preferably $2.5 \times 10^{-3}$ J/g·K or less, more preferably $2.2 \times 10^{-3}$ J/g·K or less, and still more preferably $2.0 \times 10^{-3}$ J/g·K or less.

If 42 to 80 mol% of the structural unit (I) is included relative to 100 mol% of the total structural unit of the liquid crystal polyester resin, and two or more of the following conditions (1) to (3) are satisfied, ΔS can be easily controlled within the above range.

(1) The structural unit (II) is included in the amount of 1 to 15 mol% or within the above preferable range, relative to 100 mol% of the total structural unit of the liquid crystal polyester resin.
(2) The structural unit (III) is included in the amount of 1 to 20 mol% or within the above preferable range, relative to 100 mol% of the total structural unit of the liquid crystal polyester resin.
(3) The structural unit (IV) is included in the amount of 1 to 15 mol% or within the above preferable range, relative to 100 mol% of the total structural unit of the liquid crystal polyester resin.

From the viewpoint of more easily controlling ΔS within the above range, and obtaining low dielectric loss tangent at high temperature and also obtaining high elastic modulus and low linear expansion coefficient when formed into a film by the method mentioned later, it is particularly preferable to satisfy the condition (1).

From the viewpoint of particularly obtaining high elastic modulus when formed into a film by the method mentioned later, it is preferable to satisfy the condition (3) of the conditions (2) and (3). From the viewpoint of particularly obtaining low linear expansion coefficient, it is preferable to satisfy the condition (2).

Meanwhile, form the viewpoint of more easily controlling ΔS within the above range, and obtaining low dielectric loss tangent at high temperature and also obtaining high elastic modulus and low linear expansion coefficient when formed into a film by the method mentioned later, it is particularly preferable to satisfy the following condition (4) or (5).

(4) The structural units (II) and (III) are included in the total amount of 9 to 22 mol% or within the above preferable range, relative to 100 mol% of the total structural unit of the liquid crystal polyester resin.
(5) The structural unit (V) is included in the total amount of 0.01 to 10 mol% or within the above preferable range, relative to 100 mol% of the total structural unit of the liquid crystal polyester resin.

The melting point (Tm) of the liquid crystal polyester resin is preferably 220°C or higher, more preferably 240°C or higher, and still more preferably 265°C or higher, from the viewpoint of controlling ΔS within the above preferable range, and obtaining low dielectric loss tangent at high temperature and also obtaining high elastic modulus and low linear expansion coefficient. Meanwhile, from the viewpoint of making it easier to form into a film by the method mentioned layer because of excellent solubility in solvent, the melting point (Tm) of the liquid crystal polyester resin is preferably 360°C or lower, more preferably 340°C or lower, and still more preferably 320°C or lower.

ΔHm (endothermic peak area of Tm) of the liquid crystal polyester resin is preferably 1.5 J/g or less from the viewpoint of controlling ΔS within the above preferable range, and obtaining low dielectric loss tangent at high temperature and also obtaining high elastic modulus and low linear expansion coefficient. ΔHm is preferably 1.4 J/g or less, more preferably 1.3 J/g or less, and still more preferably 1.2 J/g or less. Meanwhile, from the viewpoint of controlling ΔS within the above preferable range, and obtaining low dielectric loss tangent at high temperature and also obtaining high elastic

modulus and low linear expansion coefficient, ΔHm is preferably 0.01J/g or more. ΔHm is more preferably 0.05 J/g or more, still more preferably 0.1 J/g or more, and particularly preferably 0.2 J/g or more. The melting point (Tm) and ΔHm are measured by the above-mentioned differential scanning calorimetry.

The melt viscosity of the liquid crystal polyester resin is preferably 1 Pa·s or more, more preferably 3 Pa·s or more, and still more preferably 5 Pa·s or more, from the viewpoint of obtaining low dielectric loss tangent at high temperature and also obtaining high elastic modulus and low linear expansion coefficient when formed into a film. Meanwhile, from the viewpoint of making it easier to form into a film by the method mentioned layer because of excellent solubility in solvent, the melt viscosity of the liquid crystal polyester resin is preferably 35 Pa·s or less, more preferably 20 Pa·s or less, and still more preferably 10 Pa·s or less.

The melt viscosity is the value measured by a Koka-type flow tester at a temperature of the melting point (Tm) of the liquid crystal polyester resin + 10°C, or 280°C when the melting point of the liquid crystal polyester resin is 270°C or lower, under the conditions of a shear rate of 1,000/second.

The liquid crystal polyester resin of the present invention can also be pulverized into a powder. The average particle size of the liquid crystal polyester resin powder is preferably 0.1 μm or more, more preferably 0.5 μm or more, and still more preferably 1 μm or more, from the viewpoint of improving the dissolution rate in a solvent mentioned later since the aggregation of the powder can be suppressed. Meanwhile, from the viewpoint of improving the dissolution rate in a solvent mentioned later, the average particle size of the liquid crystal polyester resin powder is preferably 200 μm or less, more preferably 150 μm or less, and still more preferably 100 μm or less.

The average particle size of the liquid crystal polyester resin powder is the value of the average particle size ($D_{50}$) when the cumulative particle size distribution on the volume basis of the liquid crystal polyester resin powder dispersed in pure water is measured, assuming that the refractive index of pure water is 1.333, using a laser diffraction/light scattering type particle size distribution meter Microtrac MT3300EXII (manufactured by Nikkiso Co., Ltd.).

<Method for Producing Liquid Crystal Polyester Resin for Laminate>

The method for producing a liquid crystal polyester resin used in the present invention is not particularly limited, and the liquid crystal polyester resin can be produced according to a known polycondensation method of a polyester. Specifically, using a liquid crystal polyester resin composed of a structural unit derived from 6-hydroxy-2-naphthoic acid, a structural unit derived from 4,4'-dihydroxybiphenyl, a structural unit derived from terephthalic acid, a structural unit derived from isophthalic acid and a structural unit derived from ethylene glycol as an example, the following method can be exemplified.

(1) A method in which a liquid crystal polyester resin is produced by acetic acid-eliminating polycondensation from 6-acetoxy-2-naphthoic acid, 4,4'-diacetoxybiphenyl and isophthalic acid, and a polymer or an oligomer of a polyester such as polyethylene terephthalate, or bis(β-hydroxyethyl)terephthalate.
(2) A method in which p-hydroxybenzoic acid, 6-hydroxy-2-naphthoic acid, 4,4'-dihydroxybiphenyl, isophthalic acid, and a polymer or an oligomer of a polyester such as polyethylene terephthalate, or bis(β-hydroxyethyl)terephthalate are reacted with acetic anhydride to thereby acetylate a phenolic hydroxyl group, and then a liquid crystal polyester resin is produced by an acetic acid-eliminating polycondensation reaction.
(3) A method in which 1,2-bis(6-hydroxy-2-naphthoyl)ethane is used as a part of starting materials in the production method (1) or (2).

Of these, the method (2) is preferably used in view the fact that it is industrially excellent in controlling the degree of polymerization of the liquid crystal polyester resin.

As the method for producing a liquid crystal polyester resin used in the present invention, it is also possible to complete the polycondensation reaction by a solid phase polymerization method. Examples of the treatment by the solid phase polymerization method include the following method. First, a polymer or an oligomer of the liquid crystal polyester resin is pulverized by a pulverizer. The reaction is completed by heating the pulverized polymer or oligomer in a nitrogen stream or under reduced pressure and polycondensing to the desired degree of polymerization. The heating is preferably performed within a range of the melting point - 50°C to the melting point - 5°C (for example, 200 to 300°C) of the liquid crystal polyester for 1 to 50 hours.

The polycondensation reaction of the liquid crystal polyester resin proceeds in the absence of a catalyst, and it is also possible to use, as the catalyst, stannous acetate, tetrabutyl titanate, potassium acetate and sodium acetate, antimony trioxide, metallic magnesium and the like.

<Solvent in Which Liquid Crystal Polyester Resin is Dissolved>

The liquid crystal polyester resin of the present invention can be used in various applications as a liquid crystal

polyester resin and a liquid crystal polyester resin composition containing a solvent because of its excellent solubility in a solvent.

The solvent referred as used herein refers to a solvent in which 1 part by weight or more of the liquid crystal polyester resin can be dissolved in 100 parts by weight of the solvent.

The liquid crystal polyester resin composition as used herein may be in any of a state where the liquid crystal polyester resin is dissolved but partially remains without being dissolved, a state where the liquid crystal polyester resin is completely dissolved and liquefied, and a state where the liquid crystal polyester resin is dissolved and then the thus obtained solution is solidified by cooling.

The method for producing such a liquid crystal polyester resin composition will be described. The solvent is not particularly limited as long as it can dissolve the liquid crystal polyester resin within the above range, and examples thereof include halogenated phenols, halogenated alcohol, and mixed solvents of the above solvents and common organic solvents. Examples of the halogenated phenol include 2-chlorophenol, 3-chlorophenol, 4-chlorophenol, 2,4,6-trichlorophenol, 2-fluorophenol, 3-fluorophenol, 4-fluorophenol, 2-bromophenol, 4-chloro-2-fluorophenol, 2-chloro-4-fluorophenol, 3,4,5-trifluorophenol, 2,4,6-trifluorophenol, 2,3,5,6-tetrafluorophenol, pentafluorophenol and the like, and examples of the halogenated alcohol include hexafluoroisopropanol. In view of the solubility, 4-chlorophenol and pentafluorophenol are preferable, and it is more preferable that pentafluorophenol is included in the largest amount.

The liquid crystal polyester resin composition of the present invention includes preferably 100 parts by weight or more, more preferably 150 parts by weight or more, and still more preferably 200 parts by weight or more of the solvent, relative to 100 parts by weight of the liquid crystal polyester resin, from the viewpoint of being capable of uniformly applying in the case of applying onto a support by controlling the solution viscosity to such an extent that it does not become excessively high, and obtaining low dielectric loss tangent at high temperature and also obtaining high elastic modulus and low linear expansion coefficient when formed into a film. Meanwhile, from the viewpoint of being capable of uniformly applying in the case of applying onto a support by ensuring the solution viscosity, and obtaining low dielectric loss tangent at high temperature and also obtaining high elastic modulus and low linear expansion coefficient when formed into a film, the liquid crystal polyester resin composition includes preferably 10,000 parts by weight or less, more preferably 5,000 parts by weight or less, and still more preferably 2,000 parts by weight or less of the solvent, relative to 100 parts by weight of the liquid crystal polyester resin.

The liquid crystal polyester resin composition may be filtered through a filter as necessary to remove fine foreign substances contained in the composition.

<Filler>

Known fillers, additives and the like may be included in the liquid crystal polyester resin or the liquid crystal polyester resin composition containing the solvent of the present invention as long as the effects of the present invention are not impaired.

Examples of the filler include fillers such as fibrous fillers, whisker-like fillers, plate-like fillers, powdery fillers and granular fillers. Specific examples of fibrous fillers or whisker-like fillers include glass fibers, PAN-based or pitch-based carbon fibers, metal fibers such as stainless steel fibers, aluminum fibers and brass fibers, organic fibers such as aromatic polyamide fibers and liquid crystal polyester fibers, gypsum fibers, ceramic fibers, asbestos fibers, zirconia fibers, alumina fibers, silica fibers, titanium oxide fibers, silicon carbide fibers, rock wools, potassium titanate whiskers, barium titanate whiskers, aluminum borate whiskers, silicon nitride whiskers and acicular titanium oxides. Examples of plate-like fillers include mica, talc, kaolin, glass flakes, clay, molybdenum disulfide, wollastonite and boron nitride. Examples of powdery fillers or granular fillers include silica, glass beads, titanium oxide, zinc oxide, calcium polyphosphate, graphite and polytetrafluoroethylene. The surface of the above fillers may be treated with a known coupling agent (for example, a silane-based coupling agent, a titanate-based coupling agent, etc.) and other surface treatment agents. Two or more kinds of fillers may be used in combination.

It is possible to mix, as additives, common additives selected from antioxidants, heat stabilizers (for example, hindered phenol, hydroquinone, phosphite, thioethers and substitutes thereof), UV absorbers (for example, resorcinol, salicylate), anti-colorants such as phosphites and hypophosphites, lubricants and mold release agents (such as montanic acid and metal salts thereof, esters thereof, half esters thereof, stearyl alcohols, stearamides and polyethylene waxes), colorants including dyes or pigments, carbon black as conductive agents or colorants, crystal nucleating agents, plasticizers, flame retardants (bromine-based flame retardants, phosphorus-based flame retardants, red phosphorus, silicone-based flame retardants, etc.), flame retardant aids and antistatic agents.

It is possible to use, as the method of mixing the above-mentioned fillers and additives, for example, a dry blending method in which a filler and other solid additives are mixed with a liquid crystal polyester resin, a solution mixing method in which a filler and other liquid additives are mixed in a liquid crystal polyester resin, a method in which a filler and other additives are added during polymerization of a liquid crystal polyester resin, a method in which a filler and other additives are melt-kneaded with a liquid crystal polyester resin, a method in which a filler and other additives are added to a

liquid crystal polyester resin composition containing a solvent and the like. Of these, the method the melt-kneading method and the method in which a filler and other additives are added to a liquid crystal polyester resin composition containing a solvent are preferable, and from the viewpoint of the dispersibility in the liquid crystal polyester resin, the method in which a filler and other additives are added to a liquid crystal polyester resin composition containing a solvent is more preferable.

A known method can be used for melt-kneading. For example, a Banbury mixer, a rubber roll machine, a kneader, a single-screw or twin-screw extruder and the like can be used. Of these, a twin-screw extruder is preferable. The melt-kneading temperature is preferably the melting point of the liquid crystal polyester resin or higher and the melting point of + 50°C or lower.

Examples of the kneading method include 1) a method in which a liquid crystal polyester resin, a filler and other additives are charged at once from a feeder and then kneaded (batch kneading method), 2) a method in which a liquid crystal polyester resin and other additives are charged from the side feeder, and after kneading, other additives are added as necessary from the side feeder, followed by kneading (side feeding method), 3) a method in which a liquid crystal polyester resin composition (master pellet) containing a liquid crystal polyester resin and other additives in a high concentration is fabricated and then the master pellet is kneaded with the liquid crystal polyester resin and a filler so as to have a specified concentration (master pellet method) and the like. Examples of the method of adding a filler and other additives include a batch kneading method, a sequential addition method, a method of adding a high-concentration composition (master) and the like, and any method may be used.

The liquid crystal polyester resin and the liquid crystal polyester resin composition of the present invention can be formed into a molded article having excellent surface appearance (color tone), mechanical properties and heat resistance by molding methods such as usual injection molding, extrusion molding, press molding, solution casting film forming and spinning. Examples of the molded article as used herein include injection-molded articles, extrusion-molded articles, press-molded articles, sheets, pipes, various films such as unstretched films, uniaxially stretched films and biaxially stretched films, and various fibers such as unstretched yarns and super-stretched yarns. From the viewpoint of remarkably obtaining the effects of the liquid crystal polyester resin of the present invention, which has low dielectric loss tangent at high temperatures and also has high elastic modulus and low linear expansion coefficient, a film is preferable, and a film formed by solution casting film formation is particularly preferable. The method for producing a film will be described later.

<Liquid Crystal Polyester Resin Film and Laminate>

The liquid crystal polyester resin and the liquid crystal polyester resin composition of the present invention can be used as raw materials for producing a liquid crystal polyester resin film and a laminate.

The liquid crystal polyester resin film of the present invention includes the liquid crystal polyester resin or the liquid crystal polyester resin composition of the present invention. The liquid crystal polyester resin film can be produced, for example, by the following method (I) or (II).

(I) A method in which the liquid crystal polyester resin of the present invention is melt-extruded onto a support by, for example, a single-screw extruder, a twin-screw extruder, a vent extruder, a tandem extruder or the like to obtain a laminate, and then the support is removed from the laminate thus obtained.
(II) A method in which the liquid crystal polyester resin composition of the present invention is applied onto a support and the solvent is removed to obtain a laminate, and then the support is removed from the laminate thus obtained (solution casting film formation mentioned above).

From the viewpoint of obtaining low dielectric loss tangent at high temperature and also obtaining high elastic modulus and low linear expansion coefficient, and from the viewpoint of being capable of obtaining the liquid crystal polyester resin film of the present invention by a simple operation, the method (II) is preferable.

The laminate of the present invention is a laminate comprising a support and a resin layer which are mutually laminated, the support being laminated on at least one surface of a resin layer containing the liquid crystal polyester resin or the liquid crystal polyester resin composition of the present invention. The laminate can be produced, for example, by the following methods (III) to (VI).

(III) A method in which the liquid crystal polyester resin composition of the present invention is applied onto a support, and then a solvent is removed.
(IV) A method in which the film produced by the method (I) or (II) is attached to a support by thermal bonding.
(V) A method in which the film produced by the method (I) or (II) and a support are attached with an adhesive.
(VI) A method in which a support is formed on the film produced by the method (I) or (II) by vapor deposition.

From the viewpoint being capable of easily forming a resin layer having a uniform thickness, and of obtaining a

laminate having high adhesion between the resin layer and the support and less deformation, the method (III) is preferable.

The support used in the methods (II) to (VI) is not particularly limited and is selected from a metal foil, a glass substrate, a polymer film and the like. In the supports used in the methods (II) and (III), it is important that they are resistant to the solvent used. The support may be a simple substance such as a metal foil, a glass substrate or a polymer film, or a composite material thereof. Examples of the polymer film include a polyimide film, a liquid crystal polyester film, a cycloolefin polymer film and a polypropylene film each having insulation properties.

Examples of the metal used when the support is a metal foil in the methods (III) to (V) and when the support is a metal layer in the method (VI) include gold, silver, copper, nickel, aluminum and the like. Copper is preferable for applications of circuit boards such as flexible printed wiring boards and rigid printed wiring boards in electric/electronic components and mechanical components.

The method for producing a laminate by the method (III) will be described below.

Examples of the method of applying the liquid crystal polyester resin composition onto the support include various means such as a roller coating method, a dip coating method, a spray coater method, a spinner coating method, a curtain coating method, a slot coating method and a screen printing method. Using these means, the liquid crystal polyester resin composition is cast flatly and uniformly on a support to form a coating film.

Subsequently, a liquid crystal polyester resin layer is formed on a surface of the support by removing the solvent in the coating film. The method for removing the solvent is preferably performed by evaporation of the solvent. Examples of the method for evaporating the solvent include methods such as heating, depressurization and ventilation. From the viewpoint of suppressing rapid evaporation of the solvent and of being capable of obtaining a film which is free from cracks and has a uniform thickness, it is preferable to remove the solvent by heating. The heating temperature is not particularly limited as long as the solvent volatilizes, but the temperature is preferably lower than the boiling point of the solvent, from the viewpoint of suppressing rapid evaporation of the solvent and of being capable of obtaining a film which is free from cracks and has a uniform film. Therefore, it is preferable to heat at the temperature higher than room temperature and lower than the boiling point of the solvent.

After forming the laminate in this way, a heat treatment may be further performed as necessary from the viewpoint of obtaining low dielectric loss tangent at high temperature and also obtaining high elastic modulus and low linear expansion coefficient. The method of the heat treatment is not particularly limited, and the heat treatment can be performed using an apparatus such as a hot air oven, a decompression oven or a hot plate. The heat treatment may be performed under atmospheric pressure or under pressure or reduced pressure as long as the support and the liquid crystal polyester resin do not deteriorate. From the viewpoint of suppressing deterioration of the liquid crystal polyester resin, it is preferable to perform the heat treatment in an atmosphere of inert gas. Examples of the method for the heat treatment include a method in which the heat treatment is performed in the range of the melting point - 100°C to the melting point + 50°C of the liquid crystal polyester resin for 1 to 50 hours in a nitrogen stream, and a method in which the heat treatment is performed by raising the temperature from the range of the melting point - 100°C to the melting point - 5°C to the range of the melting point + 5°C to the melting point + 50°C of the liquid crystal polyester resin over 1 to 50 hours in a nitrogen stream.

Examples of the structure of the laminate obtained in this manner includes a two-layered structure of a film and a support, a three-layered structure in which a support is laminated on both surfaces of the film, a three-layered structure in which a film is laminated on both surfaces of the support, and a multi-layered structure in which four or more layers of a film and a support are alternately laminated.

The laminate obtained by the above method is used for, for example, electric/electronic components represented by various computers, OA equipment and AV equipment, and circuit boards such as flexible printed wiring boards and rigid printed wiring boards on which electric/electronic components are mounted; semiconductor package used for in-vehicle semiconductors, industrial semiconductors, etc.; base materials of a transparent conductive film, base materials of a polarizing film, packaging films for various cooked foods and microwave heating, films for electromagnetic wave shielding, antibacterial films, gas separation films and the like. Since the resin layer has low dielectric loss tangent at high temperature and also has high elastic modulus and low linear expansion coefficient, it is possible to easily obtain a laminate in which transmission loss at high temperature and deformation are suppressed, and thus the laminate is suitably used for circuit boards such as flexible printed wiring boards and rigid printed wiring boards in electric/electronic components and mechanical components which use a laminate, and semiconductor packages.

[Examples]

Hereinafter, the present invention will be described by way of Examples, but the present invention is not limited to Examples. In Examples, the composition and evaluation of properties of the liquid crystal polyester resin were measured by the following methods.

(1) Composition Analysis of Liquid Crystal Polyester Resin

To 0.1 mg of pulverized liquid crystal polyester resin pellets, 2 μL of a 25% methanol solution of tetramethylammonium hydroxide was added, and pyrolysis GC/MS measurement was performed using GCMS-QP5050A manufactured by Shimadzu Corporation to determine the composition ratio of each constituent component in the liquid crystal polyester resin.

(2) Measurement of Melting Point (Tm) and ΔS (Entropy of Melting) of Liquid Crystal Polyester Resin

After observation of an endothermic peak temperature ($Tm_1$) observed when heating under temperature rising conditions of 20°C/minute from room temperature using a differential scanning calorimeter DSC-7 (manufactured by PerkinElmer, Inc.), the liquid crystal polyester resin was maintained at the temperature of $Tm_1$ + 20°C for 5 minutes, followed by observation of an endothermic peak temperature observed when the temperature is once fallen to room temperature under temperature falling conditions of 20°C/minute and then raised again under temperature rising conditions of 20°C/minute, and the endothermic peak temperature thus obtained was defined as the melting point (Tm) and the endothermic peak area was defined as the heat of melting (ΔHm). ΔS (J/g·K) was calculated from Tm and ΔHm by the following equation [2]. In the following Production Examples, the melting point is designated as Tm and the entropy of melting is designated as ΔS.

$$\Delta S\ (J/g\cdot K) = \Delta Hm(J/g)/Tm(K) \qquad [2]$$

(3) Melt Viscosity of Liquid Crystal Polyester Resin

Using a Koka-type flow tester CFT-500D (orifice: 0.5φ × 10 mm) (manufactured by Shimadzu Corporation), the melt viscosity was measured under conditions of Tm + 10°C, or 280°C when Tm is lower than 270°C, and the shear rate of 1,000/second.

(4) Average Particle Size of Liquid Crystal Polyester Resin Powder

The average particle size ($D_{50}$) was calculated by measuring the cumulative particle size distribution on the volume basis of the liquid crystal polyester resin powder dispersed in pure water, assuming that the refractive index of pure water is 1.333, using a laser diffraction/light scattering type particle size distribution meter Microtrac MT3300EXII (manufactured by Nikkiso Co., Ltd.).

[Example 1]

In a 5 L reaction vessel equipped with a stirring blade and a distillation tube, 25 parts by weight of p-hydroxybenzoic acid, 1,355 parts by weight of 6-hydroxy-2-naphthoic acid, 184 parts by weight of 4,4'-dihydroxybiphenyl, 164 parts by weight of isophthalic acid, 121 parts by weight of polyethylene terephthalate having an intrinsic viscosity of about 0.6 dl/g, and 1,032 parts by weight (1.08 equivalents of the total of phenolic hydroxyl groups) of acetic anhydride were charged and, after reacting at 145°C for 120 minutes while stirring in a nitrogen gas atmosphere, the temperature was raised from 145°C to 300°C over 4 hours. Thereafter, the polymerization temperature was maintained at 300°C and the pressure was reduced to 1.0 mmHg (133 Pa) over 1.0 hour, and after continuously reacting, the polymerization was completed when the torque required for stirring reached 10 kg·cm. Then, the inside of the reaction vessel was pressurized to 1.0 $kg/cm^2$ (0.1 MPa) and the polymer was extruded into strands through a spinneret with one circular outlet having a diameter of 10 mm, followed by pelletization using a cutter to obtain a liquid crystal polyester resin (A-1).

When the composition of this liquid crystal polyester resin (A-1) was analyzed, the structural unit derived from p-hydroxybenzoic acid (structural unit (IV)) was 1.7 mol%, the structural unit derived from 6-hydroxy-2-naphthoic acid (structural unit (I)) was 67.8 mol%, the structural unit derived from 4,4'-dihydroxybiphenyl was 9.3 mol%, the structural unit derived from terephthalic acid was 5.9 mol%, the structural unit derived from isophthalic acid (structural unit (III)) was 9.3 mol%, and the structural unit derived from ethylene glycol (structural unit (II)) was 5.9 mol%. Tm was 280°C, ΔS was $0.85 \times 10^{-3}$ J/g·K, and the melt viscosity was 10 Pa·s.

[Example 2]

In a 5 L reaction vessel equipped with a stirring blade and a distillation tube, 124 parts by weight of p-hydroxybenzoic acid, 1,304 parts by weight of 6-hydroxy-2-naphthoic acid, 225 parts by weight of polyethylene

terephthalate having an intrinsic viscosity of about 0.6 dl/g, and 839 parts by weight (1.05 equivalents of the total of phenolic hydroxyl groups) of acetic anhydride were charged and, after reacting at 145°C for 120 minutes while stirring in a nitrogen gas atmosphere, the temperature was raised from 145°C to 300°C over 4 hours. Thereafter, the polymerization temperature was maintained at 300°C and the pressure was reduced to 1.0 mmHg (133 Pa) over 1.0 hour, and after continuously reacting, the polymerization was completed when the torque required for stirring reached 10 kg·cm. Then, the inside of the reaction vessel was pressurized to 1.0 $kg/cm^2$ (0.1 MPa) and the polymer was extruded into strands through a spinneret with one circular outlet having a diameter of 10 mm, followed by pelletization using a cutter to obtain a liquid crystal polyester resin (A-2).

When the composition of this liquid crystal polyester resin (A-2) was analyzed, the structural unit derived from p-hydroxybenzoic acid (structural unit (IV)) was 8.8 mol%, the structural unit derived from 6-hydroxy-2-naphthoic acid (structural unit (I)) was 68.1 mol%, the structural unit derived from terephthalic acid was 11.5 mol%, and the structural unit derived from ethylene glycol (structural unit (II)) was 11.5 mol%. Tm was 276°C, $\Delta S$ was $1.75 \times 10^{-3}$ J/g·K, and the melt viscosity was 10 Pa·s.

[Example 3]

In a 5 L reaction vessel equipped with a stirring blade and a distillation tube, 37 parts by weight of p-hydroxybenzoic acid, 965 parts by weight of 6-hydroxy-2-naphthoic acid, 335 parts by weight of 4,4'-dihydroxybiphenyl, 299 parts by weight of isophthalic acid, and 1,011 parts by weight (1.10 equivalents of the total of phenolic hydroxyl groups) of acetic anhydride were charged and, after reacting at 145°C for 120 minutes while stirring in a nitrogen gas atmosphere, the temperature was raised from 145°C to 300°C over 4 hours. Thereafter, the polymerization temperature was maintained at 300°C and the pressure was reduced to 1.0 mmHg (133 Pa) over 1.0 hour, and after continuously reacting, the polymerization was completed when the torque required for stirring reached 10 kg·cm. Then, the inside of the reaction vessel was pressurized to 1.0 $kg/cm^2$ (0.1 MPa) and the polymer was extruded into strands through a spinneret with one circular outlet having a diameter of 10 mm, followed by pelletization using a cutter to obtain a liquid crystal polyester resin (A-3).

When the composition of this liquid crystal polyester resin (A-3) was analyzed, the structural unit derived from p-hydroxybenzoic acid (structural unit (IV)) was 3.0 mol%, the structural unit derived from 6-hydroxy-2-naphthoic acid (structural unit (I)) was 57.0 mol%, the structural unit derived from 4,4'-dihydroxybiphenyl was 20.0 mol%, and the structural unit derived from isophthalic acid (structural unit (III)) was 20.0 mol%. Tm was 257°C, $\Delta S$ was $2.68 \times 10^{-3}$ J/g·K, and the melt viscosity was 10 Pa·s.

[Example 4]

In a 5 L reaction vessel equipped with a stirring blade and a distillation tube, 1,355 parts by weight of 6-hydroxy-2-naphthoic acid, 218 parts by weight of 4,4'-dihydroxybiphenyl, 194 parts by weight of isophthalic acid, 121 parts by weight of polyethylene terephthalate having an intrinsic viscosity of about 0.6 dl/g, and 1,052 parts by weight (1.08 equivalents of the total of phenolic hydroxyl groups) of acetic anhydride were charged and, after reacting at 145°C for 120 minutes while stirring in a nitrogen gas atmosphere, the temperature was raised from 145°C to 300°C over 4 hours. Thereafter, the polymerization temperature was maintained at 300°C and the pressure was reduced to 1.0 mmHg (133 Pa) over 1.0 hour, and after continuously reacting, the polymerization was completed when the torque required for stirring reached 10 kg·cm. Then, the inside of the reaction vessel was pressurized to 1.0 $kg/cm^2$ (0.1 MPa) and the polymer was extruded into strands through a spinneret with one circular outlet having a diameter of 10 mm, followed by pelletization using a cutter to obtain a liquid crystal polyester resin (A-4).

When the composition of this liquid crystal polyester resin (A-4) was analyzed, the structural unit derived from 6-hydroxy-2-naphthoic acid (structural unit (I)) was 66.7 mol%, the structural unit derived from 4,4'-dihydroxybiphenyl was 10.8 mol%, the structural unit derived from terephthalic acid was 5.8 mol%, the structural unit derived from isophthalic acid (structural unit (III)) was 10.8 mol%, and the structural unit derived from ethylene glycol (structural unit (II)) was 5.8 mol%. Tm was 280°C, $\Delta S$ was $1.68 \times 10^{-3}$ J/g·K, and the melt viscosity was 10 Pa·s.

[Example 5]

In a 5 L reaction vessel equipped with a stirring blade and a distillation tube, 186 parts by weight of p-hydroxybenzoic acid, 1,186 parts by weight of 6-hydroxy-2-naphthoic acid, 259 parts by weight of polyethylene terephthalate having an intrinsic viscosity of about 0.6 dl/g, and 820 parts by weight (1.05 equivalents of the total of phenolic hydroxyl groups) of acetic anhydride were charged and, after reacting at 145°C for 120 minutes while stirring in a nitrogen gas atmosphere, the temperature was raised from 145°C to 300°C over 4 hours. Thereafter, the polymerization temperature was maintained at 300°C and the pressure was reduced to 1.0 mmHg (133 Pa) over 1.0 hour, and after

continuously reacting, the polymerization was completed when the torque required for stirring reached 10 kg·cm. Then, the inside of the reaction vessel was pressurized to 1.0 $kg/cm^2$ (0.1 MPa) and the polymer was extruded into strands through a spinneret with one circular outlet having a diameter of 10 mm, followed by pelletization using a cutter to obtain a liquid crystal polyester resin (A-5).

When the composition of this liquid crystal polyester resin (A-5) was analyzed, the structural unit derived from p-hydroxybenzoic acid (structural unit (IV)) was 13.0 mol%, the structural unit derived from 6-hydroxy-2-naphthoic acid (structural unit (I)) was 60.9 mol%, the structural unit derived from terephthalic acid was 13.0 mol%, and the structural unit derived from ethylene glycol (structural unit (II)) was 13.0 mol%. Tm was 235°C, $\Delta S$ was $1.93 \times 10^{-3}$ J/g·K, and the melt viscosity was 10 Pa·s.

[Example 6]

In a 5 L reaction vessel equipped with a stirring blade and a distillation tube, 149 parts by weight of p-hydroxybenzoic acid, 1,270 parts by weight of 6-hydroxy-2-naphthoic acid, 283 parts by weight of polyethylene naphthalate ("Teonex" TN8050SC, manufactured by TEIJIN LIMITED), and 839 parts by weight of acetic anhydride (1.05 equivalents of the total of phenolic hydroxyl groups) were charged and, after reacting at 145°C for 120 minutes while stirring in a nitrogen gas atmosphere, the temperature was raised from 145°C to 300°C over 4 hours. Thereafter, the polymerization temperature was maintained at 300°C and the pressure was reduced to 1.0 mmHg (133 Pa) over 1.0 hour, and after continuously reacting, the polymerization was completed when the torque required for stirring reached 10 kg·cm. Then, the inside of the reaction vessel was pressurized to 1.0 $kg/cm^2$ (0.1 MPa) and the polymer was extruded into strands through a spinneret with one circular outlet having a diameter of 10 mm, followed by pelletization using a cutter to obtain a liquid crystal polyester resin (A-6).

When the composition of this liquid crystal polyester resin (A-6) was analyzed, the structural unit derived from p-hydroxybenzoic acid (structural unit (IV)) was 10.6 mol%, the structural unit derived from 6-hydroxy-2-naphthoic acid (structural unit (I)) was 66.4 mol%, the structural unit derived from 2,6-naphthalenedicarboxylic acid was 11.5 mol%, and the structural unit derived from ethylene glycol (structural unit (II)) was 11.5 mol%. Tm was 271°C, $\Delta S$ was $2.68 \times 10^{-3}$ J/g·K, and the melt viscosity was 10 Pa·s.

[Example 7]

In a 5 L reaction vessel equipped with a stirring blade and a distillation tube, 37 parts by weight of p-hydroxybenzoic acid, 1,304 parts by weight of 6-hydroxy-2-naphthoic acid, 126 parts by weight of 4,4'-dihydroxybiphenyl, 112 parts by weight of terephthalic acid, 216 parts by weight of polyethylene terephthalate having an intrinsic viscosity of about 0.6 dl/g, and 943 parts by weight (1.08 equivalents of the total of phenolic hydroxyl groups) of acetic anhydride were charged and, after reacting at 145°C for 120 minutes while stirring in a nitrogen gas atmosphere, the temperature was raised from 145°C to 300°C over 4 hours. Thereafter, the polymerization temperature was maintained at 300°C and the pressure was reduced to 1.0 mmHg (133 Pa) over 1.0 hour, and after continuously reacting, the polymerization was completed when the torque required for stirring reached 10 kg·cm. Then, the inside of the reaction vessel was pressurized to 1.0 $kg/cm^2$ (0.1 MPa) and the polymer was extruded into strands through a spinneret with one circular outlet having a diameter of 10 mm, followed by pelletization using a cutter to obtain a liquid crystal polyester resin (A-7).

When the composition of this liquid crystal polyester resin (A-7) was analyzed, the structural unit derived from p-hydroxybenzoic acid (structural unit (IV)) was 2.5 mol%, the structural unit derived from 6-hydroxy-2-naphthoic acid (structural unit (I)) was 64.2 mol%, the structural unit derived from 4,4'-dihydroxybiphenyl was 6.3 mol%, the structural unit derived from terephthalic acid was 16.7 mol%, and the structural unit derived from ethylene glycol (structural unit (II)) was 10.4 mol%. Tm was 257°C, $\Delta S$ was $2.49 \times 10^{-3}$ J/g·K, and the melt viscosity was 10 Pa·s.

[Example 8]

In a 5 L reaction vessel equipped with a stirring blade and a distillation tube, 106 parts by weight of p-hydroxybenzoic acid, 1,372 parts by weight of 6-hydroxy-2-naphthoic acid, 182 parts by weight of polyethylene terephthalate having an intrinsic viscosity of about 0.6 dl/g, and 863 parts by weight (1.05 equivalents of the total of phenolic hydroxyl groups) of acetic anhydride were charged and, after reacting at 145°C for 120 minutes while stirring in a nitrogen gas atmosphere, the temperature was raised from 145°C to 300°C over 4 hours. Thereafter, the polymerization temperature was maintained at 300°C and the pressure was reduced to 1.0 mmHg (133 Pa) over 1.0 hour, and after continuously reacting, the polymerization was completed when the torque required for stirring reached 10 kg·cm. Then, the inside of the reaction vessel was pressurized to 1.0 $kg/cm^2$ (0.1 MPa) and the polymer was extruded into strands through a spinneret with one circular outlet having a diameter of 10 mm, followed by pelletization using a cutter to obtain a liquid crystal polyester resin (A-8).

When the composition of this liquid crystal polyester resin (A-8) was analyzed, the structural unit derived from p-hydroxybenzoic acid (structural unit (IV)) was 7.7 mol%, the structural unit derived from 6-hydroxy-2-naphthoic acid (structural unit (I)) was 73.3 mol%, the structural unit derived from terephthalic acid was 9.5 mol%, and the structural unit derived from ethylene glycol (structural unit (II)) was 9.5 mol%. Tm was 292°C, ΔS was 2.14 × $10^{-3}$ J/g·K, and the melt viscosity was 10 Pa·s.

[Example 9]

In a 5 L reaction vessel equipped with a stirring blade and a distillation tube, 1,016 parts by weight of 6-hydroxy-2-naphthoic acid, 436 parts by weight of 4,4'-dihydroxybiphenyl, 350 parts by weight of terephthalic acid, 39 parts by weight of isophthalic acid, 242 parts by weight of polyethylene terephthalate having an intrinsic viscosity of about 0.6 dl/g, and 1132 parts by weight (1.10 equivalents of the total of phenolic hydroxyl groups) of acetic anhydride were charged and, after reacting at 145°C for 120 minutes while stirring in a nitrogen gas atmosphere, the temperature was raised from 145°C to 300°C over 4 hours. Thereafter, the polymerization temperature was maintained at 300°C and the pressure was reduced to 1.0 mmHg (133 Pa) over 1.0 hour, and after continuously reacting, the polymerization was completed when the torque required for stirring reached 10 kg·cm. Then, the inside of the reaction vessel was pressurized to 1.0 kg/$cm^2$ (0.1 MPa) and the polymer was extruded into strands through a spinneret with one circular outlet having a diameter of 10 mm, followed by pelletization using a cutter to obtain a liquid crystal polyester resin (A-9).

When the composition of this liquid crystal polyester resin (A-9) was analyzed, the structural unit derived from 6-hydroxy-2-naphthoic acid (structural unit (I)) was 42.9 mol%, the structural unit derived from 4,4'-dihydroxybiphenyl was 18.6 mol%, the structural unit derived from terephthalic acid was 26.7 mol%, the structural unit derived from isophthalic acid (structural unit (III)) was 1.9 mol%, and the structural unit derived from ethylene glycol (structural unit (II)) was 10.0 mol%. Tm was 263°C, ΔS was 2.09 × $10^{-3}$ J/g·K, and the melt viscosity was 10 Pa·s.

[Example 10]

In a 5 L reaction vessel equipped with a stirring blade and a distillation tube, 124 parts by weight of p-hydroxybenzoic acid, 1,270 parts by weight of 6-hydroxy-2-naphthoic acid, 20 parts by weight of hydroquinone, 30 parts by weight of isophthalic acid, 225 parts by weight of polyethylene terephthalate having an intrinsic viscosity of about 0.6 dl/g, and 859 parts by weight (1.05 equivalents of the total of phenolic hydroxyl groups) of acetic anhydride were charged and, after reacting at 145°C for 120 minutes while stirring in a nitrogen gas atmosphere, the temperature was raised from 145°C to 300°C over 4 hours. Thereafter, the polymerization temperature was maintained at 300°C and the pressure was reduced to 1.0 mmHg (133 Pa) over 1.0 hour, and after continuously reacting, the polymerization was completed when the torque required for stirring reached 10 kg·cm. Then, the inside of the reaction vessel was pressurized to 1.0 kg/$cm^2$ (0.1 MPa) and the polymer was extruded into strands through a spinneret with one circular outlet having a diameter of 10 mm, followed by pelletization using a cutter to obtain a liquid crystal polyester resin (A-10).

When the composition of this liquid crystal polyester resin (A-10) was analyzed, the structural unit derived from p-hydroxybenzoic acid (structural unit (IV)) was 8.7 mol%, the structural unit derived from 6-hydroxy-2-naphthoic acid (structural unit (I)) was 65.2 mol%, the structural unit derived from hydroquinone was 1.7 mol%, the structural unit derived from terephthalic acid was 11.3 mol%, the structural unit derived from isophthalic acid (structural unit (III)) was 1.7 mol%, and the structural unit derived from ethylene glycol (structural unit (II)) was 11.3 mol%. Tm was 268°C, ΔS was 1.72 × $10^{-3}$ J/g·K, and the melt viscosity was 10 Pa·s.

[Example 11]

In a 5 L reaction vessel equipped with a stirring blade and a distillation tube, 25 parts by weight of p-hydroxybenzoic acid, 1,355 parts by weight of 6-hydroxy-2-naphthoic acid, 151 parts by weight of 4,4'-dihydroxybiphenyl, 20 parts by weight of catechol, 164 parts by weight of isophthalic acid, 121 parts by weight of polyethylene terephthalate having an intrinsic viscosity of about 0.6 dl/g, and 1,032 parts by weight (1.08 equivalents of the total of phenolic hydroxyl groups) of acetic anhydride were charged and, after reacting at 145°C for 120 minutes while stirring in a nitrogen gas atmosphere, the temperature was raised from 145°C to 300°C over 4 hours. Thereafter, the polymerization temperature was maintained at 300°C and the pressure was reduced to 1.0 mmHg (133 Pa) over 1.0 hour, and after continuously reacting, the polymerization was completed when the torque required for stirring reached 10 kg·cm. Then, the inside of the reaction vessel was pressurized to 1.0 kg/$cm^2$ (0.1 MPa) and the polymer was extruded into strands through a spinneret with one circular outlet having a diameter of 10 mm, followed by pelletization using a cutter to obtain a liquid crystal polyester resin (A-11).

When the composition of this liquid crystal polyester resin (A-11) was analyzed, the structural unit derived from p-hydroxybenzoic acid (structural unit (IV)) was 1.7 mol%, the structural unit derived from 6-hydroxy-2-naphthoic acid

(structural unit (I)) was 67.8 mol%, the structural unit derived from 4,4'-dihydroxybiphenyl was 7.6 mol%, the structural unit derived from catechol (structural unit (V)) was 1.7 mol%, the structural unit derived from terephthalic acid was 5.9 mol%, the structural unit derived from isophthalic acid (structural unit (III)) was 9.3 mol%, and the structural unit derived from ethylene glycol (structural unit (II)) was 5.9 mol%. Tm was 272°C, ΔS was 0.81 × $10^{-3}$ J/g·K, and the melt viscosity was 10 Pa·s.

[Example 12]

In a 5 L reaction vessel equipped with a stirring blade and a distillation tube, 25 parts by weight of p-hydroxybenzoic acid, 1,355 parts by weight of 6-hydroxy-2-naphthoic acid, 84 parts by weight of 4,4'-dihydroxybiphenyl, 59 parts by weight of catechol, 164 parts by weight of isophthalic acid, 121 parts by weight of polyethylene terephthalate having an intrinsic viscosity of about 0.6 dl/g, and 1,032 parts by weight (1.08 equivalents of the total of phenolic hydroxyl groups) of acetic anhydride were charged and, after reacting at 145°C for 120 minutes while stirring in a nitrogen gas atmosphere, the temperature was raised from 145°C to 300°C over 4 hours. Thereafter, the polymerization temperature was maintained at 300°C and the pressure was reduced to 1.0 mmHg (133 Pa) over 1.0 hour, and after continuously reacting, the polymerization was completed when the torque required for stirring reached 10 kg·cm.
Then, the inside of the reaction vessel was pressurized to 1.0 kg/$cm^2$ (0.1 MPa) and the polymer was extruded into strands through a spinneret with one circular outlet having a diameter of 10 mm, followed by pelletization using a cutter to obtain a liquid crystal polyester resin (A-12).

When the composition of this liquid crystal polyester resin (A-12) was analyzed, the structural unit derived from p-hydroxybenzoic acid (structural unit (IV)) was 1.7 mol%, the structural unit derived from 6-hydroxy-2-naphthoic acid (structural unit (I)) was 67.8 mol%, the structural unit derived from 4,4'-dihydroxybiphenyl was 4.2 mol%, the structural unit derived from catechol (structural unit (V)) was 5.1 mol%, the structural unit derived from terephthalic acid was 5.9 mol%, the structural unit derived from isophthalic acid (structural unit (III)) was 9.3 mol%, and the structural unit derived from ethylene glycol (structural unit (II)) was 5.9 mol%. Tm was 255°C, ΔS was 0.83 × $10^{-3}$ J/g·K, and the melt viscosity was 10 Pa·s.

[Comparative Example 1]

In a 5 L reaction vessel equipped with a stirring blade and a distillation tube, 1,355 parts by weight of 6-hydroxy-2-naphthoic acid, 126 parts by weight of 4,4'-dihydroxybiphenyl, 112 parts by weight of isophthalic acid, 216 parts by weight of polyethylene terephthalate having an intrinsic viscosity of about 0.6 dl/g, and 985 parts by weight (1.13 equivalents of the total of phenolic hydroxyl groups) of acetic anhydride were charged and, after reacting at 145°C for 120 minutes while stirring in a nitrogen gas atmosphere, the temperature was raised from 145°C to 300°C over 4 hours. Thereafter, the polymerization temperature was maintained at 300°C and the pressure was reduced to 1.0 mmHg (133 Pa) over 1.0 hour, and after continuously reacting, the polymerization was completed when the torque required for stirring reached 10 kg·cm.
Then, the inside of the reaction vessel was pressurized to 1.0 kg/$cm^2$ (0.1 MPa) and the polymer was extruded into strands through a spinneret with one circular outlet having a diameter of 10 mm, followed by pelletization using a cutter to obtain a liquid crystal polyester resin (A-13).

When the composition of this liquid crystal polyester resin (A-13) was analyzed, the structural unit derived from 6-hydroxy-2-naphthoic acid (structural unit (I)) was 66.7 mol%, the structural unit derived from 4,4'-dihydroxybiphenyl was 6.3 mol%, the structural unit derived from terephthalic acid was 16.7 mol%, and the structural unit derived from ethylene glycol (structural unit (II)) was 10.4 mol%. Tm was 264°C, ΔS was 3.54 × $10^{-3}$ J/g·K, and the melt viscosity was 10 Pa·s.

[Comparative Example 2]

In a 5 L reaction vessel equipped with a stirring blade and a distillation tube, 1,016 parts by weight of 6-hydroxy-2-naphthoic acid, 335 parts by weight of 4,4'-dihydroxybiphenyl, 299 parts by weight of isophthalic acid, and 1,011 parts by weight (1.10 equivalents of the total of phenolic hydroxyl groups) of acetic anhydride were charged and, after reacting at 145°C for 120 minutes while stirring in a nitrogen gas atmosphere, the temperature was raised from 145°C to 300°C over 4 hours. Thereafter, the polymerization temperature was maintained at 300°C and the pressure was reduced to 1.0 mmHg (133 Pa) over 1.0 hour, and after continuously reacting, the polymerization was completed when the torque required for stirring reached 10 kg·cm. Then, the inside of the reaction vessel was pressurized to 1.0 kg/$cm^2$ (0.1 MPa) and the polymer was extruded into strands through a spinneret with one circular outlet having a diameter of 10 mm, followed by pelletization using a cutter to obtain a liquid crystal polyester resin (A-14).

When the composition of this liquid crystal polyester resin (A-14) was analyzed, the structural unit derived from 6-hydroxy-2-naphthoic acid (structural unit (I)) was 60.0 mol%, the structural unit derived from 4,4'-dihydroxybiphenyl was 20.0 mol%, and the structural unit derived from isophthalic acid (structural unit (III)) was 20.0 mol%. Tm was 261°C, ΔS was

$3.59 \times 10^{-3}$ J/g·K, and the melt viscosity was 10 Pa·s.

[Comparative Example 3]

In a 5 L reaction vessel equipped with a stirring blade and a distillation tube, 124 parts by weight of p-hydroxybenzoic acid, 1,186 parts by weight of 6-hydroxy-2-naphthoic acid, 346 parts by weight of polyethylene terephthalate having an intrinsic viscosity of about 0.6 dl/g, and 809 parts by weight (1.10 equivalents of the total of phenolic hydroxyl groups) of acetic anhydride were charged and, after reacting at 145°C for 120 minutes while stirring in a nitrogen gas atmosphere, the temperature was raised from 145°C to 300°C over 4 hours. Thereafter, the polymerization temperature was maintained at 300°C and the pressure was reduced to 1.0 mmHg (133 Pa) over 1.0 hour, and after continuously reacting, the polymerization was completed when the torque required for stirring reached 10 kg·cm. Then, the inside of the reaction vessel was pressurized to 1.0 kg/cm$^2$ (0.1 MPa) and the polymer was extruded into strands through a spinneret with one circular outlet having a diameter of 10 mm, followed by pelletization using a cutter to obtain a liquid crystal polyester resin (A-15).
When the composition of this liquid crystal polyester resin (A-15) was analyzed, the structural unit derived from p-hydroxybenzoic acid (structural unit (IV)) was 8.3 mol%, the structural unit derived from 6-hydroxy-2-naphthoic acid (structural unit (I)) was 58.3 mol%, the structural unit derived from terephthalic acid was 16.7 mol%, and the structural unit derived from ethylene glycol (structural unit (II)) was 16.7 mol%. Since Tm was not observed, ΔS could not be calculated. The melt viscosity at 280°C was 10 Pa·s.

[Comparative Example 4]

In a 5 L reaction vessel equipped with a stirring blade and a distillation tube, 746 parts by weight of p-hydroxybenzoic acid, 678 parts by weight of 6-hydroxy-2-naphthoic acid, and 1,029 parts by weight (1.12 equivalents of the total of phenolic hydroxyl groups) of acetic anhydride were charged and, after reacting at 145°C for 120 minutes while stirring in a nitrogen gas atmosphere, the temperature was raised from 145°C to 300°C over 4 hours. Thereafter, the polymerization temperature was maintained at 300°C and the pressure was reduced to 1.0 mmHg (133 Pa) over 1.0 hour, and after continuously reacting, the polymerization was completed when the torque required for stirring reached 15 kg·cm. Then, the inside of the reaction vessel was pressurized to 1.0 kg/cm$^2$ (0.1 MPa) and the polymer was extruded into strands through a spinneret with one circular outlet having a diameter of 10 mm, followed by pelletization using a cutter to obtain a liquid crystal polyester resin (A-16).
When the composition of this liquid crystal polyester resin (A-16) was analyzed, the structural unit derived from p-hydroxybenzoic acid (structural unit (IV)) was 60.0 mol% and the structural unit derived from 6-hydroxy-2-naphthoic acid (structural unit (I)) was 40.0 mol%. Tm was 265°C, ΔS was $0.72 \times 10^{-3}$ J/g·K, and the melt viscosity was 10 Pa·s.

[Comparative Example 5]

In a 5 L reaction vessel equipped with a stirring blade and a distillation tube, 25 parts by weight of p-hydroxybenzoic acid, 813 parts by weight of 6-hydroxy-2-naphthoic acid, 419 parts by weight of 4,4'-dihydroxybiphenyl, 374 parts by weight of terephthalic acid, and 965 parts by weight (1.05 equivalents of the total of phenolic hydroxyl groups) of acetic anhydride were charged and, after reacting at 145°C for 1 hour while stirring in a nitrogen gas atmosphere, the temperature was raised from 145°C to 360°C over 4 hours. Thereafter, the polymerization temperature was maintained at 360°C and the pressure was reduced to 1.0 mmHg (133 Pa) over 1.0 hour, and after continuously reacting, the polymerization was completed when the torque required for stirring reached 20 kg·cm. Then, the inside of the reaction vessel was pressurized to 1.0 kg/cm$^2$ (0.1 MPa) and the polymer was extruded into strands through a spinneret with one circular outlet having a diameter of 10 mm, followed by pelletization using a cutter to obtain a liquid crystal polyester resin (A-17).
When the composition of this liquid crystal polyester resin (A-17) was analyzed, the structural unit derived from p-hydroxybenzoic acid (structural unit (IV)) was 2.0 mol%, the structural unit derived from 6-hydroxy-2-naphthoic acid (structural unit (I)) was 48.0 mol%, the structural unit derived from 4,4'-dihydroxybiphenyl was 25.0 mol%, and the structural unit derived from terephthalic acid was 25.0 mol%. Tm was 350°C, ΔS was $2.80 \times 10^{-3}$ J/g·K, and the melt viscosity was 25 Pa·s.

[Comparative Example 6]

In a 5 L reaction vessel equipped with a stirring blade and a distillation tube, 994 parts by weight of p-hydroxybenzoic acid, 126 parts by weight of 4,4'-dihydroxybiphenyl, 112 parts by weight of terephthalic acid, 216 parts by weight of polyethylene terephthalate having an intrinsic viscosity of about 0.6 dl/g, and 960 parts by weight (1.10

equivalents of the total of phenolic hydroxyl groups) of acetic anhydride were charged and, after reacting at 145°C for 60 minutes while stirring in a nitrogen gas atmosphere, the temperature was raised from 145°C to 320°C over 4 hours. Thereafter, the polymerization temperature was maintained at 320°C and the pressure was reduced to 1.0 mmHg (133 Pa) over 1.0 hour, and after continuously reacting, the polymerization was completed when the torque required for stirring reached 20 kg·cm. Then, the inside of the reaction vessel was pressurized to 1.0 $kg/cm^2$ (0.1 MPa) and the polymer was extruded into strands through a spinneret with one circular outlet having a diameter of 10 mm, followed by pelletization using a cutter to obtain a liquid crystal polyester resin (A-18).

When the composition of this liquid crystal polyester resin (A-18) was analyzed, the structural unit derived from p-hydroxybenzoic acid (structural unit (IV)) was 66.7 mol%, the structural unit derived from 4,4'-dihydroxybiphenyl was 6.3 mol%, the structural unit derived from terephthalic acid was 16.7 mol%, and the structural unit derived from ethylene glycol (structural unit (II)) was 10.4 mol%. Tm was 313°C, ΔS was $1.90 \times 10^{-3}$ J/g·K, and the melt viscosity was 13 Pa·s.

The pellets obtained in Examples 1 to 12 and Comparative Examples 1 to 6 were pulverized into a powder by a coarse pulverizer, and the evaluation of (4) was performed. 900 parts by weight of pentafluorophenol was added to (A-1) to (A-15), 3,000 parts by weight of pentafluorophenol was added to (A-16) and (A-17), and 1,300 parts by weight of pentafluorophenol was added to (A-18), relative to 100 parts by weight of the powder thus obtained. Each liquid crystal polyester resin was completely dissolved by heating to 130°C, and then defoamed by stirring to obtain a brown transparent solution. The solution thus obtained was cast on an electrolytic copper foil (manufactured by FUKUDA METAL FOIL&POWDER Co., Ltd., 12 μm thickness) using a film applicator, heated to 80°C on a hot plate to remove the solvent, and then subjected to a heat treatment at 200°C for 1 hour to obtain a copper clad laminate. The copper foil was removed from the copper clad laminate thus obtained using a ferric chloride solution to obtain a liquid crystal polyester resin film having a thickness of 25 μm. The results of the following evaluations (5) to (7) are shown in the Table 1.

[Table 1]

| | Liquid crystal polyester resin | Average particle size of liquid crystal polyester resin powder (μm) | ΔS ($10^{-3}$ J/g·K) | Structural unit (I) (mol%) | Structural unit (II) (mol%) | Structural unit (III) (mol%) | Structural unit (IV) (mol%) | Structural unit (V) (mol%) | Total of structural units (II) and (III) (mol%) | Dielectric loss tangent at 20 GHz and 150°C | Tensile elastic modulus of film (GPa) | Linear expansion coefficient of film (ppm/°C) |
|---|---|---|---|---|---|---|---|---|---|---|---|---|
| Example 1 | A-1 | 90 | 0.85 | 67.8 | 5.9 | 9.3 | 1.7 | 0.0 | 15.3 | 0.0057 | 6.2 | 57 |
| Example 2 | A-2 | 93 | 1.75 | 68.1 | 11.5 | 0.0 | 8.8 | 0.0 | 11.5 | 0.0064 | 6.3 | 64 |
| Example 3 | A-3 | 120 | 2.68 | 57.0 | 0.0 | 20.0 | 3.0 | 0.0 | 20.0 | 0.0101 | 5.0 | 93 |
| Example 4 | A-4 | 95 | 1.68 | 66.7 | 5.8 | 10.8 | 0.0 | 0.0 | 16.7 | 0.0061 | 5.8 | 55 |
| Example 5 | A-5 | 95 | 1.93 | 60.9 | 13.0 | 0.0 | 13.0 | 0.0 | 13.0 | 0.0068 | 5.7 | 66 |
| Example 6 | A-6 | 122 | 2.68 | 66.4 | 11.5 | 0.0 | 10.6 | 0.0 | 11.5 | 0.0096 | 4.9 | 94 |
| Example 7 | A-7 | 107 | 2.49 | 64.2 | 10.4 | 0.0 | 2.5 | 0.0 | 10.4 | 0.0082 | 5.2 | 85 |
| Example 8 | A-8 | 98 | 2.14 | 73.3 | 9.5 | 0.0 | 7.7 | 0.0 | 9.5 | 0.0075 | 5.5 | 90 |
| Example 9 | A-9 | 115 | 2.09 | 42.9 | 10.0 | 1.9 | 0.0 | 0.0 | 11.9 | 0.0104 | 4.9 | 86 |
| Example 10 | A-10 | 94 | 1.72 | 65.2 | 11.3 | 1.7 | 8.7 | 0.0 | 13.0 | 0.0060 | 5.9 | 56 |
| Example 11 | A-11 | 87 | 0.81 | 67.8 | 5.9 | 9.3 | 1.7 | 1.7 | 15.3 | 0.0050 | 6.7 | 48 |
| Example 12 | A-12 | 88 | 0.83 | 67.8 | 5.9 | 9.3 | 1.7 | 5.1 | 15.3 | 0.0052 | 6.5 | 50 |
| Comparative Example 1 | A-13 | 127 | 3.54 | 66.7 | 10.4 | 0.0 | 0.0 | 0.0 | 10.4 | 0.0127 | 4.3 | 113 |
| Comparative Example 2 | A-14 | 125 | 3.59 | 60.0 | 0.0 | 20.0 | 0.0 | 0.0 | 20.0 | 0.0126 | 4.4 | 122 |
| Comparative Example 3 | A-15 | 130 | Impossible to calculate | 58.3 | 16.7 | 0.0 | 8.3 | 0.0 | 16.7 | 0.0175 | 3.0 | 133 |
| Comparative Example 4 | A-16 | 133 | 0.72 | 40.0 | 0.0 | 0.0 | 60.0 | 0.0 | 0.0 | 0.0131 | 3.4 | 110 |
| Comparative Example 5 | A-17 | 152 | 2.80 | 48.0 | 0.0 | 0.0 | 2.0 | 0.0 | 0.0 | 0.0124 | 4.4 | 112 |

(continued)

| | Liquid crystal polyester resin | Average particle size of liquid crystal polyester resin powder (μm) | $\Delta S$ ($10^{-3}$ J/g·K) | Structural unit (I) (mol%) | Structural unit (II) (mol%) | Structural unit (III) (mol%) | Structural unit (IV) (mol%) | Structural unit (V) (mol%) | Total of structural units (II) and (III) (mol%) | Dielectric loss tangent at 20 GHz and 150°C | Tensile elastic modulus of film (GPa) | Linear expansion coefficient of film (ppm/°C) |
|---|---|---|---|---|---|---|---|---|---|---|---|---|
| Comparative Example 6 | A-18 | 135 | 1.90 | 0.0 | 10.4 | 0.0 | 66.7 | 0.0 | 10.4 | 0.0195 | 1.7 | 144 |

(5) Evaluation of Dielectric Loss Tangent at High Temperature

The liquid crystal polyester resin film thus obtained was cut into a 70 mm square, and the dielectric loss tangent at a frequency of 20 GHz and a temperature of 150°C was measured by the split cylinder resonator method in conformity with JISR 1641 using a network analyzer (N5290A, manufactured by Keysight Technologies). The lower the value, the better the dielectric loss tangent.

(6) Evaluation of Elastic Modulus

The liquid crystal polyester resin film thus obtained were cut into strips having a length of 150 mm and a width of 10 mm as samples. Using TENSILON UCT-100 manufactured by ORIENTEC Co., LTD, the measurement was performed five times at an initial tension chuck distance of 50 mm and a tension speed of 200 mm/min according to the method specified in JIS K 7127, and then the average value of the tensile elastic modulus was calculated. The higher the value, the better the elastic modulus.

(7) Evaluation of Linear Expansion Coefficient

The liquid crystal polyester resin film thus obtained was cut into strips having a length of 50 mm and a width of 4 mm. The temperature was raised from 30°C to 200°C at a rate of 10°C/min by SSC-5020/TMA100 manufactured by Seiko Denshi Kogyo Co., Ltd., and then the linear expansion coefficient at 30°C to 200°C was measured. The lower the coefficient of linear expansion, the better the coefficient of linear expansion.

Examples 13 to 25, Comparative Examples 7 to 12

The thus obtained liquid crystal polyester resins (A-1) to (A-18) were pulverized into a powder by a coarse pulverizer, and the evaluation of (4) was performed. The solvent (B-1) was mixed in the amount shown in Table 2 and the liquid crystal polyester resin was completely dissolved by heating to 130°C. After cooling to 50°C, the solvent (B-2) was mixed in the amount shown in Table 2, followed by stirred and further defoaming to obtain a brown transparent solution. Subsequently, the filler (C) was mixed in the amount shown in Table 2. The solution thus obtained was cast on an electrolytic copper foil (manufactured by FUKUDA METAL FOIL&POWDER Co., Ltd., 12 μm thickness) using a film applicator, heated to 80°C on a hot plate to remove the solvent, and then subjected to a heat treatment at 200°C for 1 hour to obtain a copper clad laminate. The copper foil was removed from the copper clad laminate thus obtained using a ferric chloride solution to obtain a liquid crystal polyester resin film having a thickness of 25 μm. The results of the above evaluations (5) to (7) are shown in the Table 2.

[Table 2]

| | Liquid crystal polyester resin (A) | Average particle size of liquid crystal polyester resin powder | Solvent (B) | | Filler (C) | | Dielectric loss tangent at 20GHz and 150°C | Tensile elastic modulus of film (GPa) | Linear expansion coefficient of film (ppm/°C) |
|---|---|---|---|---|---|---|---|---|---|
| | (Parts by weight) | (μm) | (Parts by weight) | (Parts by weight) | (Parts by weight) | (Parts by weight) | | | |
| Example 13 | A-1 (100) | 90 | B-1 (900) | B-2 (500) | - | C-2 (40) | 0.0052 | 6.3 | 40 |
| Example 14 | A-2 (100) | 93 | B-1 (900) | B-2 (500) | - | C-2 (40) | 0.0059 | 6.4 | 46 |
| Example 15 | A-3 (100) | 120 | B-1 (900) | B-2 (500) | - | C-2 (40) | 0.0095 | 5.1 | 77 |
| Example 16 | A-4 (100) | 95 | B-1 (900) | B-2 (500) | - | C-2 (40) | 0.0057 | 6.0 | 39 |

(continued)

| | Liquid crystal polyester resin (A) | Average particle size of liquid crystal polyester resin powder | Solvent (B) | | Filler (C) | | Dielectric loss tangent at 20GHz and 150°C | Tensile elastic modulus of film (GPa) | Linear expansion coefficient of film (ppm/°C) |
|---|---|---|---|---|---|---|---|---|---|
| | (Parts by weight) | (μm) | (Parts by weight) | (Parts by weight) | (Parts by weight) | (Parts by weight) | | | |
| Example 17 | A-5 (100) | 95 | B-1 (900) | B-2 (500) | - | C-2 (40) | 0.0064 | 5.9 | 50 |
| Example 18 | A-6 (100) | 122 | B-1 (900) | B-2 (500) | - | C-2 (40) | 0.0090 | 5.1 | 77 |
| Example 19 | A-7 (100) | 107 | B-1 (900) | B-2 (500) | - | C-2 (40) | 0.0078 | 5.4 | 70 |
| Example 20 | A-8 (100) | 98 | B-1 (900) | B-2 (500) | - | C-2 (40) | 0.0070 | 5.7 | 75 |
| Example 21 | A-9 (100) | 115 | B-1 (900) | B-2 (500) | - | C-2 (40) | 0.0097 | 5.0 | 71 |
| Example 22 | A-10 (100) | 94 | B-1 (900) | B-2 (500) | - | C-2 (40) | 0.0056 | 6.0 | 39 |
| Example 23 | A-11 (100) | 87 | B-1 (900) | B-2 (500) | - | C-2 (40) | 0.0044 | 6.8 | 33 |
| Example 24 | A-12 (100) | 88 | B-1 (900) | B-2 (500) | - | C-2 (40) | 0.0046 | 6.6 | 36 |
| Example 25 | A-1 (100) | 90 | B-1 (900) | B-2 (500) | C-1 (130) | C-2 (40) | 0.0042 | 5.9 | 51 |
| Comparative Example 7 | A-13 (100) | 127 | B-1 (900) | B-2 (500) | - | C-2 (40) | 0.0123 | 4.4 | 100 |
| Comparative Example 8 | A-14 (100) | 125 | B-1 (900) | B-2 (500) | - | C-2 (40) | 0.0121 | 4.5 | 107 |
| Comparative Example 9 | A-15 (100) | 130 | B-1 (900) | B-2 (500) | - | C-2 (40) | 0.0169 | 3.3 | 115 |
| Comparative Example 10 | A-16 (100) | 133 | B-1 (3000) | B-2 (1667) | - | C-2 (40) | 0.0125 | 3.7 | 95 |
| Comparative Example 11 | A-17 (100) | 152 | B-1 (3000) | B-2 (1667) | - | C-2 (40) | 0.0120 | 4.5 | 98 |
| Comparative Example 12 | A-18 (100) | 135 | B-1 (1300) | B-2 (722) | - | C-2 (40) | 0.0188 | 2.1 | 122 |

The solvent (B-1), the solvent (B-2) and the filler (C) used in the respective Examples and Comparative Examples are as shown below. The melting point, the boiling point and the acid dissociation constant (pKa) were cited from literatures.

(B-1) Pentafluorophenol (melting point of 34°C, boiling point of 143°C, pKa of 5.5)
(B-2) o-Chlorophenol (melting point of 8°C, boiling point of 175°C, pKa of 8.5)
(C-1) Polytetrafluoroethylene micropowder (manufactured by 3M Company, "Dyneon" TF 9207Z, average particle

size of 4 μm)
(C-2) Phenol nitride (manufactured by LONG TON, WU-BN-002, average particle size 0.6 μm)

As is apparent from the results of Tables 1 and 2, by using a liquid crystal polyester resin including a predetermined amount of the structural unit (I) and having ΔS in a predetermined range, or a liquid crystal polyester resin composition using the resin, it is possible to obtain a film having low dielectric loss tangent at high temperature and also having high elastic modulus and low linear expansion coefficient.

[Industrial Applicability]

The liquid crystal polyester resin of the present invention has low dielectric loss tangent at high temperature and also has high elastic modulus and low linear expansion coefficient when formed into a film. The liquid crystal polyester resin film and the laminate of the present invention are suitable for use in flexible printed wiring boards using a laminate characterized by laminating a plurality of laminates, circuit boards such as rigid printed wiring boards, and semiconductor packages.

## Claims

1. A liquid crystal polyester resin which includes 42 to 80 mol% of the following structural unit (I) relative to 100 mol% of the total structural unit of the liquid crystal polyester resin, and ΔS (entropy of melting) defined by the following equation [1] is $0.01 \times 10^{-3}$ to $2.7 \times 10^{3}$ J/g·K:

$$\Delta S(J/g\cdot K) = \Delta Hm(J/g)/Tm(K) \qquad [1]$$

wherein Tm means an endothermic peak temperature determined as follows: after observation of an endothermic peak temperature ($Tm_1$) observed when heating a liquid crystal polyester under temperature rising conditions of 20°C/minute from room temperature in differential scanning calorimetry, the liquid crystal polyester was maintained at the temperature of $Tm_1$ + 20°C for 5 minutes, followed by observation of the endothermic peak temperature observed when the temperature is once fallen to room temperature under temperature falling conditions of 20°C/minute and then raised again under temperature rising conditions of 20°C/minute, and ΔHm is an endothermic peak area of Tm.

[Chemical Formula 1]

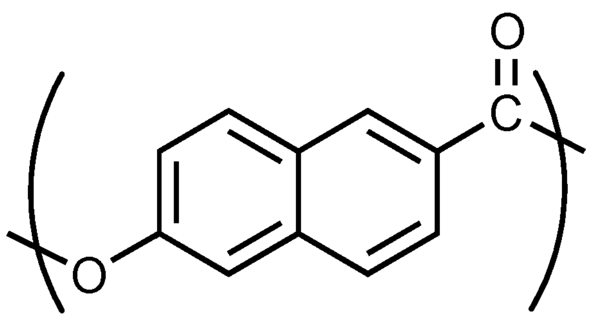

(I)

2. The liquid crystal polyester resin according to claim 1, which further includes 1 to 15 mol% of the following structural unit (II).

[Chemical Formula 2]

$$-\!\left(O-CH_2CH_2-O\right)\!- \qquad (II)$$

3. The liquid crystal polyester resin according to claim 1 or 2, which further includes 1 to 20 mol% of the following structural unit (III).

[Chemical Formula 3]

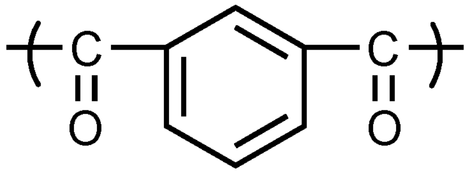

(III)

4. The liquid crystal polyester resin according to any one of claims 1 to 3, which further includes 1 to 15 mol% of the following structural unit (IV).

[Chemical Formula 4]

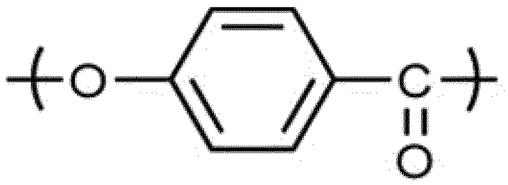

(IV)

5. The liquid crystal polyester resin according to any one of claims 1 to 4, wherein the total amount of the structural unit (II) and the structural unit (III) is 9 to 22 mol%.

6. The liquid crystal polyester resin according to any one of claims 1 to 5, which further includes 0.01 to 10 mol% of the following structural unit (V):

[Chemical Formula 5]

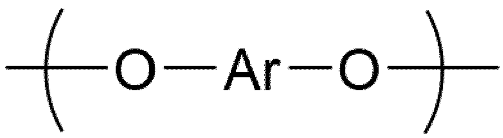

(V)

(Ar):

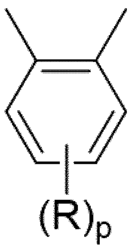

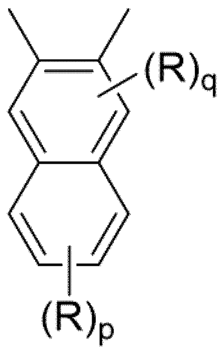

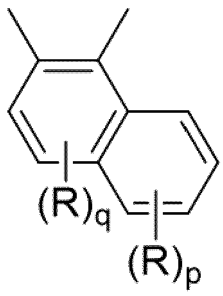

wherein Ar represents a divalent group selected from the group consisting of groups represented by (Ar), a substituent R represents F, Cl, Br, $CF_3$, a phenyl group, an alkyl group having 1 to 5 carbon atoms or an alkoxy group having 1 to 5 carbon atoms, p is any one of integers of 0 to 4, and q is any one of integers of 0 to 2.

7. The liquid crystal polyester resin according to any one of claims 1 to 6, which is a powder having an average particle size of 0.1 to 200 μm, wherein the average particle size is measured by the method of the description.

8. A liquid crystal polyester resin composition comprising 10 to 500 parts by weight of a filler relative to 100 parts by weight of the liquid crystal polyester resin according to any one of claims 1 to 7.

**9.** A liquid crystal polyester resin composition comprising the liquid crystal polyester resin according to any one of claims 1 to 7 or the liquid crystal polyester resin composition according to claim 8, and a solvent, wherein 100 to 10,000 parts by weight of the solvent is included relative to 100 parts by weight of the liquid crystal polyester resin.

**10.** A molded article comprising the liquid crystal polyester resin according to any one of claims 1 to 7 or the liquid crystal polyester resin composition according to claim 8.

**11.** A liquid crystal polyester resin film comprising the liquid crystal polyester resin according to any one of claims 1 to 7 or the liquid crystal polyester resin composition according to claim 8.

**12.** A laminate comprising a support and a resin layer which are mutually laminated, wherein the support is laminated on at least one surface of the resin layer including the liquid crystal polyester resin according to any one of claims 1 to 7 or the liquid crystal polyester resin composition according to claim 8.

**13.** A method for producing a laminate, which comprises applying the liquid crystal polyester resin composition according to claim 9 onto a support and removing the solvent.

**14.** A method for producing a liquid crystal polyester resin film, which comprises removing the support from the laminate obtained by the method according to claim 13 to obtain a liquid crystal polyester resin film.

**15.** Use of a laminate obtained by the method of claim 13 for circuit boards, and semiconductor packages.

**Patentansprüche**

**1.** Flüssigkristall-Polyesterharz, das 42 bis 80 Mol-% der folgenden Struktureinheit (I) bezogen auf 100 Mol-% aller Struktureinheiten des Flüssigkristall-Polyesterharzes umfasst, wobei ΔS (Schmelzentropie), wie durch die folgende Gleichung [1] definiert, 0,01 x $10^{-3}$ bis 2,7 x $10^{-3}$ J/g·K beträgt:

$$\Delta S\ (J/g\cdot K) = \Delta Hm\ (J/g)\ /\ Tm\ (K) \qquad [1]$$

worin Tm für die endotherme Peak-Temperatur steht, die wie folgt bestimmt wird: nach dem Beobachten einer endothermen Peak-Temperatur ($Tm_1$), die beobachtet wird, wenn ein Flüssigkristall-Polyesterharz bei dynamischer Differenzkalorimetrie unter Temperaturerhöhungsbedingungen von 20 °C/min von Raumtemperatur weg erhitzt wird, wurde das Flüssigkristall-Polyesterharz 5 min lang auf einer Temperatur von $Tm_1$ + 20 °C gehalten, gefolgt vom Beobachten der endothermen Peak-Temperatur, die beobachtet wird, wenn die Temperatur unter Temperatursenkungsbedingungen von 20 °C/min einmal auf Raumtemperatur gesunken ist und danach unter Temperaturerhöhungsbedingungen von 20 °C/min wiederum erhöht wurde, und worin ΔHm die Fläche des endothermen Peaks von Tm ist:

[Chemische Formel 1]

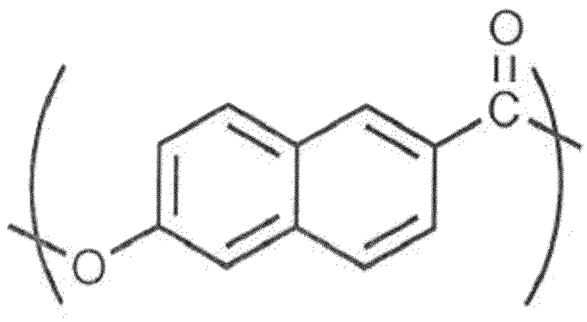

(I)

**2.** Flüssigkristall-Polyesterharz nach Anspruch 1, das weiters 1 bis 15 Mol-% der folgenden Struktureinheit (II) umfasst:

[Chemische Formel 2]

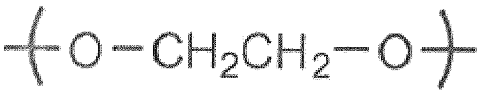 (II)

3. Flüssigkristall-Polyesterharz nach Anspruch 1 oder 2, das weiters 1 bis 20 Mol-% der folgenden Struktureinheit (III) umfasst:

[Chemische Formel 3]

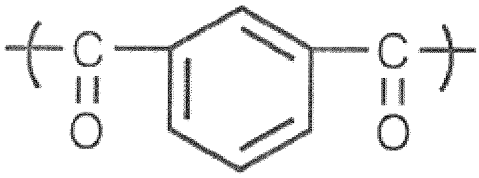 (III)

4. Flüssigkristall-Polyesterharz nach einem der Ansprüche 1 bis 3, das weiters 1 bis 15 Mol-% der folgenden Struktureinheit (IV) umfasst:

[Chemische Formel 4]

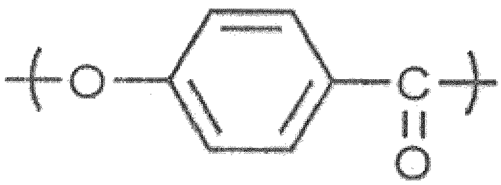 (IV)

5. Flüssigkristall-Polyesterharz nach einem der Ansprüche 1 bis 4, wobei die Gesamtmenge der Struktureinheit (II) und der Struktureinheit (III) 9 bis 22 Mol-% beträgt.

6. Flüssigkristall-Polyesterharz nach einem der Ansprüche 1 bis 5, das weiters 0,01 bis 10 Mol-% der folgenden Struktureinheit (V) umfasst:

[Chemische Formel 5]

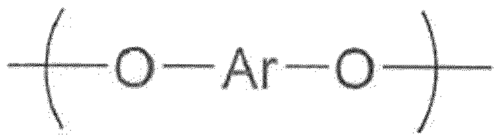 (V)

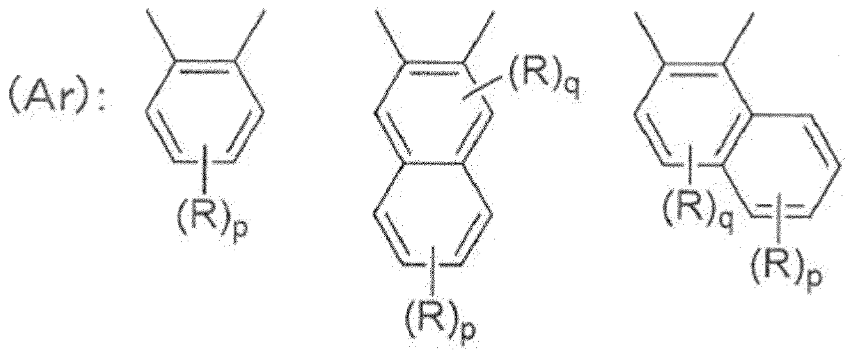

worin Ar für eine zweiwertige Gruppe steht, die aus der aus Gruppen, die durch (Ar) dargestellt sind, bestehenden Gruppe ausgewählt ist, der Substituent R für F, Cl, Br, $CF_3$, eine Phenylgruppe, eine Alkylgruppe mit 1 bis 5

Kohlenstoffatomen oder eine Alkoxygruppe mit 1 bis 5 Kohlenstoffatomen steht, p eine ganze Zahl von 0 bis 4 ist und q eine ganze Zahl von 0 bis 2 ist.

**7.** Flüssigkristall-Polyesterharz nach einem der Ansprüche 1 bis 6, bei dem es sich um ein Pulver mit einer durchschnittlichen Teilchengröße von 0,1 bis 200 μm handelt, wobei die durchschnittliche Teilchengröße nach dem Verfahren der Beschreibung gemessen wird.

**8.** Flüssigkristall-Polyesterharz-Zusammensetzung, die 10 bis 500 Gewichtsteile eines Füllstoffs bezogen auf 100 Gewichtsteile eines Flüssigkristall-Polyesterharzes nach einem der Ansprüche 1 bis 7 umfasst.

**9.** Flüssigkristall-Polyesterharz-Zusammensetzung, die ein Flüssigkristall-Polyesterharz nach einem der Ansprüche 1 bis 7 oder eine Flüssigkristall-Polyesterharz-Zusammensetzung nach Anspruch 8 und ein Lösungsmittel umfasst, wobei 100 bis 10.000 Gewichtsteile des Lösungsmittels bezogen auf 100 Gewichtsteile des Flüssigkristall-Polyesterharzes enthalten sind.

**10.** Formteil, das ein Flüssigkristall-Polyesterharz nach einem der Ansprüche 1 bis 7 oder eine Flüssigkristall-Polyesterharz-Zusammensetzung nach Anspruch 8 umfasst.

**11.** Flüssigkristall-Polyesterharz-Folie, die ein Flüssigkristall-Polyesterharz nach einem der Ansprüche 1 bis 7 oder eine Flüssigkristall-Polyesterharz-Zusammensetzung nach Anspruch 8 umfasst.

**12.** Laminat, das einen Träger und eine Harzschicht umfasst, die aneinander laminiert sind, wobei der Träger auf zumindest einer Oberfläche der Harzschicht laminiert ist, die ein Flüssigkristall-Polyesterharz nach einem der Ansprüche 1 bis 7 oder eine Flüssigkristall-Polyesterharz-Zusammensetzung nach Anspruch 8 umfasst.

**13.** Verfahren zur Herstellung eines Laminats, welches das Auftragen einer Flüssigkristall-Polyesterharz-Zusammensetzung nach Anspruch 9 auf einen Träger und das Entfernen des Lösungsmittels umfasst.

**14.** Verfahren zur Herstellung einer Flüssigkristall-Polyesterharz-Folie, welches das Entfernen des Trägers von dem Laminat umfasst, das durch ein Verfahren nach Anspruch 13 erhalten wurde, um eine Flüssigkristall-Polyesterharz-Folie zu erhalten.

**15.** Verwendung eines Laminats, das durch ein Verfahren nach Anspruch 13 erhalten wurde, für Platinen und Chipgehäuse.

## Revendications

**1.** Résine de polyester à cristaux liquides qui comprend de 42 à 80 % en mole de l'unité structurelle (I) suivante par rapport à 100 % en mole de la totalité de l'unité structurelle dans la résine de polyester à cristaux liquides, et ΔS (entropie de fusion) définie par l'équation [1] suivante est

$$0{,}01 \times 10^{-3} \text{ à } 2{,}7 \times 10^{-3} \text{ J/g.K} : \Delta S(\text{J/g.K}) = \Delta Hm(\text{J/g})/Tm(\text{K}) \quad [1]$$

dans laquelle Tm signifie une température de pic endothermique déterminée comme suit : après observation d'une température de pic endothermique ($Tm_1$) observée lors du chauffage d'un polyester à cristaux liquides dans des conditions de montée en température de 20°C/minute à partir de la température ambiante en calorimétrie à balayage différentiel, le polyester à cristaux liquides a été maintenu à la température de $Tm_1$ + 20°C pendant 5 minutes, avant l'observation de la température de pic endothermique observée lorsque la température est une fois descendue à la température ambiante dans des conditions de descente en température de 20°C/minute, puis remontée à nouveau dans des conditions de montée en température de 20°C/minute, et ΔHm est une aire de pic endothermique de Tm.

[Formule chimique 1]

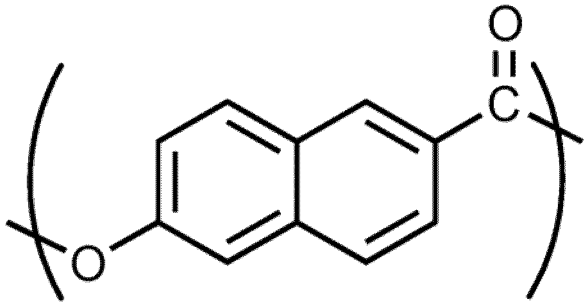

(I)

2. Résine de polyester à cristaux liquides selon la revendication 1, qui inclut en outre de 1 à 15 % en mole de l'unité structurelle (II) suivante.

[Formule chimique 2]

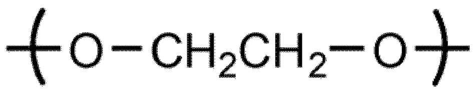

(II)

3. Résine de polyester à cristaux liquides selon la revendication 1 ou 2, qui inclut en outre de 1 à 20 % en mole de l'unité structurelle (III) suivante.

[Formule chimique 3]

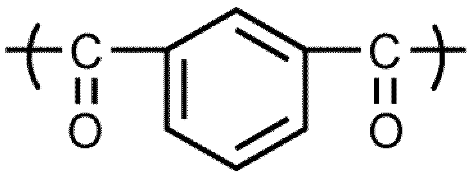

(III)

4. Résine de polyester à cristaux liquides selon l'une quelconque des revendications 1 à 3, qui inclut en outre de 1 à 15 % en mole de l'unité structurelle (IV) suivante.

[Formule chimique 4]

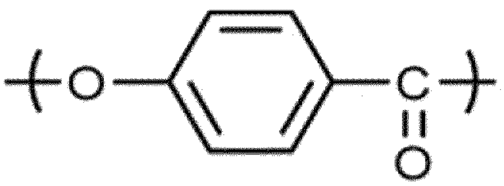

(IV)

5. Résine de polyester à cristaux liquides selon l'une quelconque des revendications 1 à 4, dans laquelle la quantité totale de l'unité structurelle (II) et de l'unité structurelle (III) est de 9 à 22 % en mole.

6. Résine de polyester à cristaux liquides selon l'une quelconque des revendications 1 à 5, qui inclut en outre de 0,01 à 10 % en mole de l'unité structurelle (V) suivante :

[Formule chimique 5]

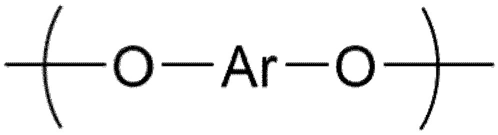

(V)

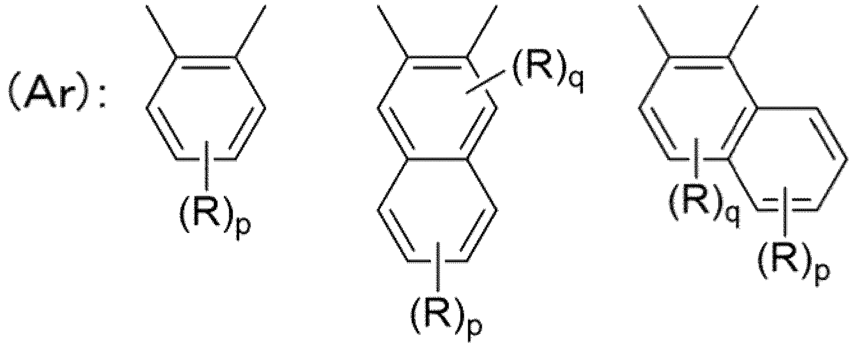

dans laquelle Ar représente un groupe divalent choisi dans le groupe constitué de groupes représentés par (Ar), un substituant R représente F, Cl, Br, CF3, un groupe phényle, un groupe alkyle présentant de 1 à 5 atomes de carbone ou un groupe alcoxy présentant de 1 à 5 atomes de carbone, p est l'un quelconque des entiers de 0 à 4, et q est l'un quelconque des entiers de 0 à 2.

7. Résine de polyester à cristaux liquides selon l'une quelconque des revendications 1 à 6, qui est une poudre présentant une taille de particule moyenne de 0,1 à 200 μm, dans laquelle la taille de particule moyenne est mesurée par le procédé de la description.

8. Composition de résine de polyester à cristaux liquides comprenant de 10 à 500 parties en poids d'une charge par rapport à 100 parties en poids de la résine de polyester à cristaux liquides selon l'une quelconque des revendications 1 à 7.

9. Composition de résine de polyester à cristaux liquides comprenant la résine de polyester à cristaux liquides selon l'une quelconque des revendications 1 à 7 ou la composition de résine de polyester à cristaux liquides selon la revendication 8, et un solvant, dans laquelle de 100 à 10 000 parties en poids du solvant sont incluses par rapport à 100 parties en poids de la résine de polyester à cristaux liquides.

10. Article moulé comprenant la résine de polyester à cristaux liquides selon l'une quelconque des revendications 1 à 7 ou la composition de résine polyester à cristaux liquides selon la revendication 8.

11. Film de résine de polyester à cristaux liquides comprenant la résine de polyester à cristaux liquides selon l'une quelconque des revendications 1 à 7 ou la composition de résine de polyester à cristaux liquides selon la revendication 8.

12. Stratifié comprenant un support et une couche de résine qui sont stratifiés mutuellement, dans lequel le support est stratifié sur au moins une surface de la couche de résine incluant la résine de polyester à cristaux liquides selon l'une quelconque des revendications 1 à 7 ou la composition de résine de polyester à cristaux liquides selon la revendication 8.

**13.** Procédé de production d'un stratifié, qui comprend l'application de la composition de résine de polyester à cristaux liquides selon la revendication 9 sur un support et l'élimination du solvant.

**14.** Procédé de production d'un film de résine de polyester à cristaux liquides, qui comprend le retrait du support à partir du stratifié obtenu par le procédé selon la revendication 13 pour obtenir un film de résine de polyester à cristaux liquides.

**15.** Utilisation d'un stratifié obtenu par le procédé de la revendication 13 pour des cartes de circuits imprimés et des boîtiers de semi-conducteurs.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004196930 A
- JP 2005126651 A
- JP 5001140 A
- JP 2004352862 A
- EP 3480240 A1